(19) Europäisches Patentamt
European Patent Office
Office européen des brevets

(11) Veröffentlichungsnummer: **0 190 603 B1**

# (12) EUROPÄISCHE PATENTSCHRIFT

(45) Veröffentlichungstag der Patentschrift: **22.03.89**

(51) Int. Cl.⁴: **C 09 B 62/002,** D 06 P 1/38

(21) Anmeldenummer: **86100775.5**

(22) Anmeldetag: **22.01.86**

(54) **Aminoalkylensulfon-triphendioxazin-Farbstoffe.**

(30) Priorität: **02.02.85 DE 3503564**

(43) Veröffentlichungstag der Anmeldung: **13.08.86 Patentblatt 86/33**

(45) Bekanntmachung des Hinweises auf die Patenterteilung: **22.03.89 Patentblatt 89/12**

(84) Benannte Vertragsstaaten: **CH DE FR GB LI**

(56) Entgegenhaltungen:
**EP-A- 0 053 743**
**EP-A- 0 144 704**

(73) Patentinhaber: **BAYER AG, Konzernverwaltung RP Patentabteilung, D-5090 Leverkusen 1 Bayerwerk (DE)**

(72) Erfinder: **Harms, Wolfgang, Dr., Walter-Flex-Strasse 21, D-5090 Leverkusen 1 (DE)**
Erfinder: **Herd, Karl Josef, Dr., Am Gartenfeld 66, D-5068 Odenthal (DE)**
Erfinder: **Jäger, Horst, Dr., Carl-Rumpff-Strasse 37, D-5090 Leverkusen 1 (DE)**
Erfinder: **Siegel, Edgar, Dr., Am Kiesberg 4, D-5090 Leverkusen 1 (DE)**

EP 0 190 603 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Farbstoffe der Formel

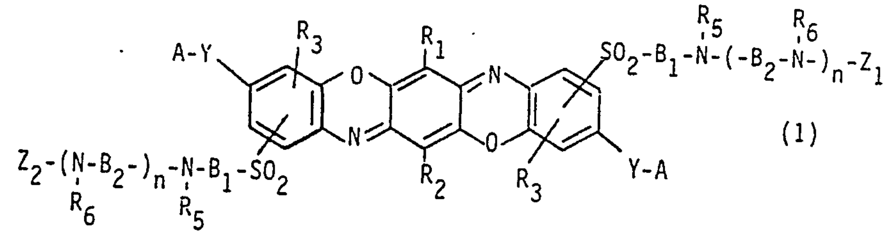

(1)

worin

$R_1$, $R_2$ = H, Cl, Br, $C_1$–$C_4$-Alkyl, $C_1$–$C_4$-Alkoxy, gegebenenfalls substituiertes Phenoxy, Acylamino, Carboxy, gegebenenfalls substituiertes Carbonamid,

$R_3$ = H, $C_1$–$C_4$-Alkyl, Cl, Br, $C_1$–$C_4$-Alkoxy, Sulfo, Carboxy,

A = H, gegebenenfalls durch Sulfo, Sulfato, Carboxy, Hydroxy oder Alkoxy substituiertes $C_1$–$C_6$-Alkyl, Cycloalkyl, Aralkyl, Aryl,

$B_1$ = gegebenenfalls substituiertes, gegebenenfalls durch O, S oder N unterbrochenes $C_2$–$C_6$-Alkylen,

$B_2$ = $B_1$ oder Aralkylen oder Arylen.

Y = O, $NR_4$,

$R_4$ = H, gegebenenfalls substituiertes $C_1$–$C_6$-Alkyl,

$R_5$, $R_6$ = H, gegebenenfalls substituiertes $C_1$–$C_6$-Alkyl, $C_5$–$C_6$-Cycloalkyl, Aryl oder zusammen $C_2$–$C_6$-Alkylen sowie $C_1$–$C_4$-Aralkyl,

n = 0 oder 1,

$Z_1$, $Z_2$ = H oder faserreaktiver Rest.

Geeignete Reste $R_1$, $R_2$ sind ausser Wasserstoff bspw. Cl, Br, $C_1$–$C_4$-Alkyl, $C_1$–$C_4$-Alkoxy, insbesondere gegebenenfalls substituiertes Phenoxy, Acylamino, insbesondere gegebenenfalls substituiertes $C_1$–$C_4$-Alkylcarbonylamino oder Phenylcarbonylamino wie Acetylamino und Benzoylamino, Carboxy, gegebenenfalls substituiertes Carbonamid.

Geeignete Reste $R_3$ sind ausser Wasserstoff beispielsweise $C_1$–$C_4$-Alkyl Cl, Br, $C_1$–$C_4$-Alkoxy, Sulfo, Carboxy.

Geeignete Reste $R_4$ sind ausser Wasserstoff beispielsweise gegebenenfalls durch OH, $SO_3H$, $OSO_3H$, COOH oder Halogen substituiertes $C_1$–$C_4$-Alkyl wie Methyl, Ethyl, Propyl, Butyl, Hydroxyethyl, Sulfatoethyl, Sulfoethyl, Carboxyethyl, Carboxypropyl, Carboxybutyl, Halogenalkyl wie Chlorethyl, Chlorpropyl, Pentyl, Hexyl.

Geeignete Reste $R_5$, $R_6$ sind ausser H beispielsweise Methyl, Ethyl, Propyl, Butyl, Pentyl, Hexyl, 2-Sulfoethyl, 2-Sulfatoethyl, 2-Hydroxyethyl, 2-Carboxylethyl, Carboxymethyl, 2-Methoxyethyl, 3-Hydroxypropyl, 3-Methoxy-1-propyl, 3-Ethoxy-1-propyl, 3-Sulfo-1-propyl, 3-Sulfato-1-propyl, 3-Carboxy-1-propyl, 2,3-Dihydroxy-1-propyl, 2-Hydroxy-1-propyl, 3-Hydroxy-1-butyl, 3-Hydroxy-2-methyl-2-propyl, 2-Methyl-1,3-dihydroxy-2-propyl, 4-Hydroxy-1-butyl, 4-Sulfato-1-butyl, 3-Butoxy-1-propyl, 5-Carboxy-1-pentyl, 2-Phenyl-ethyl, 1-Phenyl-ethyl, 2-(o-, m-, p-Sulfo- phenyl)-ethylbenzyl, 2-, 3-, 4-Sulfobenzyl, Carboxy-benzyl, Cyclohexyl, 2-, 3-, 4-Methylcyclohexyl, Phenyl, 2-, 3-, 4-Sulfophenyl, Methylphenyl, Chlorphenyl, 2-, 3-, 4-Carboxyphenyl, 2-, 3-, 4-Acetaminophenyl, 2-, 3-, 4-Methoxyphenyl.

Reste A sind neben H und $C_1$–$C_6$-Alkyl insbesondere durch Sulfo-, Sulfato-, Carboxy-, Hydroxy-, Alkoxygruppen substituierte Alkylreste wie 2-Sulfoethyl, 2-Sulfatoethyl, 2-Hydroxyethyl, 2-Carboxyethyl, Carboxymethyl, 3-Sulfatopropyl, 3-Hydroxypropyl, 3-Methoxypropyl, 4-Hydroxybutyl, 4-Sulfatobutyl, 3-Ethoxypropyl, 3-Butoxypropyl, 2-Hydroxy-1-propyl, 2-Sulfato-1-propyl, 3-Hydroxy-1-propyl, 2-Sulfato-1-propyl, 3-Hydroxy-1-butyl-, 3-Sulfato-1-butyl, 3-Hydroxy-2-methyl-2-propyl, 3-Carboxy-1-propyl, 5-Carboxy-1-pentyl,

Cycloalkylreste wie Cyclohexyl, 2-, 3-, 4-Methylcyclohexyl, Cyclopentyl, Cyclohexylmethyl. Aralkylreste wie Benzyl, o-, m-, p-Sulfobenzyl, 2-Phenyl-ethyl, 2-(o-, m-, p-Sulfophenyl)-ethyl, 1-Phenyl-2-propyl, 1-(o-, m-, p-Sulfophenyl)-2-propyl, 2-Benzylcyclohexyl, 2-(o-, m-, p-Sulfobenzyl)-cyclohexyl, 5-Methyl-1-phenyl-3-hexyl, 5-Methyl-1-(o-, m-, p-Sulfophenyl)-3-hexyl.

Arylreste, insbesondere Phenyl und durch Sulfo, Carboxy, $C_1$–$C_4$-Alkyl, $C_1$–$C_4$-Alkoxy, Halogen substituiertes Phenyl wie 2-, 3-, 4-Sulfophenyl, 2,4-Disulfophenyl, 2,5-Disulfophenyl, 4-Methyl-2-sulfophenyl, 3-Methyl-4-sulfo-phenyl, 3-Methyl-4,6-disulfophenyl, 2-Methyl-4-sulfophenyl, 4-Methoxy-2-sulfophenyl, 2-Methoxy-4-Sulfophenyl, 3-Methoxy-4-sulfophenyl, 3-Methoxy-4,6-disulfophenyl, 2-, 3-, 4-Methylphenyl, 2-, 3-, 4-Methoxyphenyl, 2,4-Dimethylphenyl, 3,4-Dimethylphenyl, 3,4-Dimethyl-5-sulfophenyl, 2-, 3-, 4-Chlorphenyl, 2,4-Dimethoxyphenyl, 2,5-Dimethoxyphenyl.

Brückenglieder $B_1$, $B_2$ sind $C_2$–$C_6$-Alkylen, gegebenenfalls durch O, S oder N unterbrochen und gegebenenfalls substituiert wie zum Beispiel Ethylen, 1,2- und 1,3-Propylen, 1,2-, 1,3-, 1,4- und 2,3-Butylen, 2-Methyl-1,3-propylen, 2,2-Dimethylpropylen, 2-Methyl-2,4-pentylen, 1,1-Dimethylethylen, 2-Hydroxy-1,3-propylen, 3-Hydroxy-1,2-propylen, 1,5-Pentylen, 1,6-Hexylen, 1,3-Cyclohexylen, 1,4-Cyclohexylen, $-CH_2-CH_2-O-CH_2-CH_2$, $-CH_2-CH_2-S-CH-CH_2$,

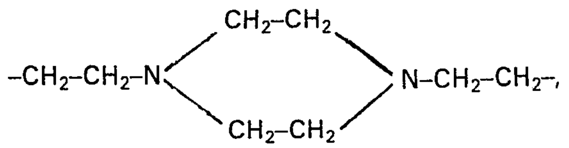

$-CH_2-CH_2-NH-CH_2-CH_2-$,

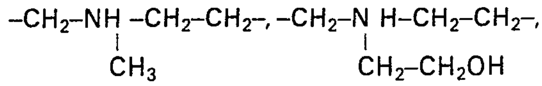

3-Chlor-1,2-propylen, 1-Chlor-2,3-propylen.

Brückenglieder $B_2$ sind ausserdem Aralkylenreste wie

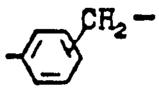 , 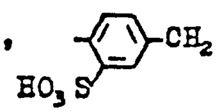 , 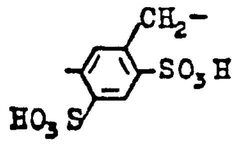 , 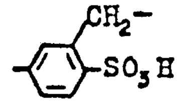 , 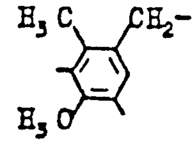

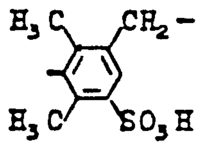 , 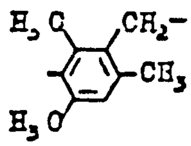 , 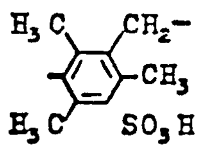 , 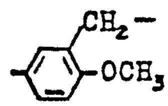 ,

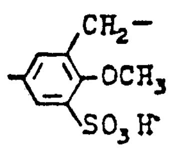 , 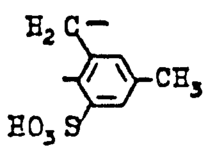 ; 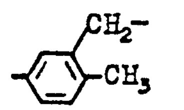 , 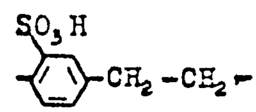

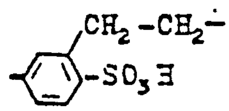 , 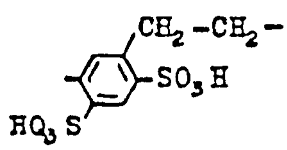 , 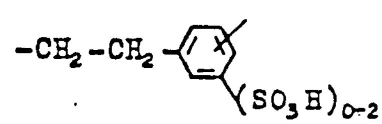 ,

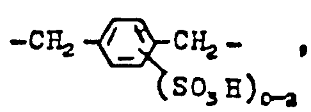 , 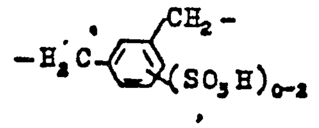 , 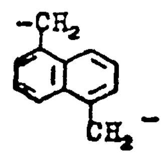 sowie der Rest

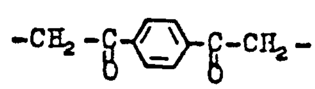

sowie weiterhin Arylenreste wie gegebenenfalls substituiertes Phenylen, insbesondere Phenylen und durch Alkyl, Alkoxy, Sulfo, Carboxy oder Halogen substituiertes Phenylen wie 1,2-, 1,3-, 1,4-Phenylen, 3-Methyl-1,2-phenylen, 4-Methyl-1,2-phenylen, 2-Methyl-1,3-phenylen, 4-Methyl-1,3-phenylen, 5-Methyl-1,3-phenylen, 2-Methyl-1,4-phenylen, 2,4,6-Trimethyl-1,3-phenylen, 2,3,5,6-Tetramethyl-1,4-phenylen, 2,6-Dimethyl-1,3-phenylen, 2-Methyl-6-ethyl-1,3-phenylen, 2-Methyl-4,6-diethyl-1,3-phenylen, 2,6-Diethyl-4-methyl-1,3-phenylen, 2-Methoxy-1,3-phenylen, 4-Methoxy-1,3-phenylen, 6-Methoxy-1,3-phenylen, 2-Methoxy-1,4-phenylen, 4-Chlor-1,3-phenylen, 2-Chlor-1,4-phenylen, 4-Chlor-1,3-phenylen, 2-Chlor-1,4-phenylen sowie insbesondere die durch 1–2 Sulfonsäuregruppen substituierten genannten Arylreste wie zum Beispiel 4-Sulfo-1,2-phenylen, 4-Sulfo-1,3-phenylen, 3-Sulfo-1,4-phenylen, 2-Sulfo-1,4-phenylen, 4,6-Disulfo-1,3-phenylen, 2,5-Disulfo-1,4-phenylen, 2-Methyl-5-sulfo-1,3-phenylen, 2-Methyl-4-sulfo-1,3-phenylen, 2,4,6-Trimethyl-5-sulfo-1,3-phenylen, 2,6-Dimethyl-4- und -5-sulfo-1,3-phenylen, 2-Methyl-6-sulfo-1,3-phenylen, 4-Methyl-6-sulfo-1,3-phenylen, 6-Methyl-4-sulfo-1,3-phenylen, 3-Methyl-6-sulfo-1,4-phenylen, 6-Methoxy-4-sulfo-1,3-phenylen, 4-Methoxy-6-sulfo-1,3-phenylen.

Besonders bevorzugt unter den Brückengliedern $B_2$ sind $C_2$–$C_6$-Alkylen-, $C_1$–$C_4$-Alkylphenylen- und $C_1$–$C_4$-Alkylsulfophenylen-reste.

Geeignete faserreaktive Reste $Z_1$, $Z_2$ also solche, die unter Färbebedingungen mit Hydroxylgruppen- oder amidgruppenhaltigen Materialien unter Ausbildung einer kovalenten Bindung reagieren, sind beispielsweise solche, die mindestens einen abspaltbaren Substituenten an einen heterocyclischen oder an einen aliphatischen Rest gebunden enthalten, insbesondere solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische ankondensiert enthalten können.

Unter den reaktiven Substituenten am Heterocyclus sind beispielsweise zu erwähnen:

Halogen (Cl, Br oder F), Ammonium, einschliesslich Hydrazinium, Sulfonium, Sulfonyl, Azido ($-N_3$), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinnyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-(2',4'-, 2',5'- oder 3',4'-Disulphenyl)-amino-4-chlor-triazinyl-6, 2-Alkoxy-4-chlortriazinyl-6-, wie 2-Methoxy- oder Ethoxy-4-chlortriazinyl-6-, 2-(Phenyl-sulfonylmethoxy)-4-chlortriazinyl-6-, 2-Aryloxy und substituiertes Aryloxy-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlor-triazinyl-6-, 2-Alkylmercapto- oder 2-Arylmercapto- oder 2-(substituiertes Aryl)-mercapto-4-chlortriazinyl-6-, wie 2-β-Hydroxymethylmercapto-4-chlor-triazinyl-6-, 2-Phenyl-mercapto-4-chlortriazinyl-6-, 3-(4'-Methylphenyl)-mercapto-4-chlortriazinyl-6-, 2-(2', 4'-Dinitro)-phenyl-mercapto-4-chlortriazinyl-6-, 2-Methyl-4-chlor-triazinyl-6-, 2-Phenyl-4-chlor-triazinyl-6-, 2,4-Difluortriazinyl-6, Monofluortriazinylreste, die durch Amino-, Alkylamino-, Aralkylamino, Arylaminogruppen substituiert sind, wobei Alkyl, insbesondere gegebenenfalls substituiertes $C_1$–$C_4$-Alkyl, Aralkyl, insbesondere gegebenenfalls substituiertes Phenyl-$C_1$–$C_4$-Alkyl und Aryl, insbesondere gegebenenfalls durch Sulfo-, Alkyl-, insbesondere $C_1$–$C_4$-Alkyl, Alkoxy-, insbesondere $C_1$–$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6-, 2-Methylamino-4-fluor-triazinyl-6-, 2-Ethylamino-4-fluor-triazinyl-6-, 2-iso-Propylamino-4-fluor-triazinyl-6, 2-Dimethylamino-4-fluor-triazinyl-6-, 2-Diethylamino-4-fluor-triazinyl-6, 2-β-Methoxy- ethylamino- 4-fluor-triazinyl- 6, 2-β-Hydroxy- ethylamino- 4-fluor-triazinyl- 6, 2-Di-(β-hydroxyethyl-amino)-4-fluor- triazinyl-6, 2-β-Sulfoethylamino- 4-fluor-triazinyl-6, 2-β-Sulfoethyl-methylamino- 4-fluor-triazinyl-6, 2-Carboxymethylamino-4-fluortriazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfo-benzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)- amino-4-fluor-triazinyl-6, 2-(2'-Chlor-4'-sulfophenyl)- amino-4-fluor-triazinyl-6, 2-(2'-Chlor-5'-sulfophenyl)- amino-4-fluor-triazinyl-6, 2-(2'-Methoxy-4'-sulfophenyl)- amino-4-fluor-triazinyl-6, 2-(o-, m-, p-Carboxyphenyl)- amino-4-fluor-triazinyl-6, 2-(2',4'-Disulfophenyl)-amino- 4-fluor-triazinyl-6, 2-(3',5'-Disulfophenyl)-amino- 4-fluor-triazinyl-6, 2-(2'-Carboxy-4'-sulfophenyl)-amino- 4-fluor-triazinyl-6, 2-(6'-Sulfonaphthyl-(2') )-amino- 4-fluor-triazinyl-6, 2-(4',8'-Disulfonaphthyl-(2') )-amino- 4-fluor-triazinyl-6, 2-(6',8'-Disulfonaphthyl-(2') )-amino- 4-fluor-triazinyl-6, 2-(N-Methylphenyl) -amino-4-fluor-triazinyl-6, 2-(N-Ethylphenyl)-amino-4-fluor-triazinyl-6, 2-(N-β-Hydroxyethylphenyl)-amino- 4-fluor-triazinyl-6, 2-(N-iso-Propylphenyl)-amino- 4-fluor-triazinyl-6, 2-Morpholino-4-fluor-triazinyl-6, 2-Piperidino-4-fluor-triazinyl-6, 2-(4',6',8'-Trisulfonaphthyl-(2') )- 4-fluor-triazinyl-6, 2-(3',6',8'-Trisulfonaphthyl-(2') )- 2-fluor-triazinyl-6,

2-(3',6'-disulfonaphthyl-(1') )-4-fluor-triazinyl-6, 2-Chlor- oder 2-Fluor-4-(4'-β-sulfoatoethylsulfonyl-phenyl-amino)- 6-triazinyl; 2-Chlor- oder 2-Fluor-4-(3'-β-sulfato- ethylsulfonyl-phenylamino)- 6-triazinyl; 2-Chlor- und 2-Fluor-4-(β-(β'-sulfatoethylsulfonyl)- ethylamino)- 6-triazinyl; 2-Fluor-4-bis-(β-(β' -chlorethylsulfonyl)-ethyl)-amino-6-triazinyl.

Die Halogentriazinylreste können auch mit einem zweiten Halogentriazinylrest oder Halogendiazinylrest verknüpft sein. Beispiele für derartige Reste sind die folgenden:

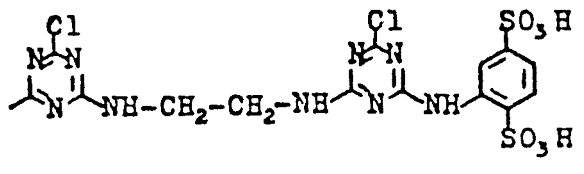

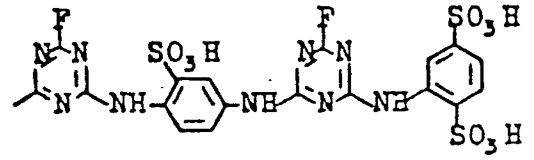

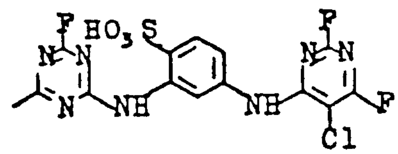

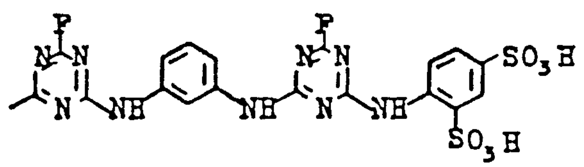

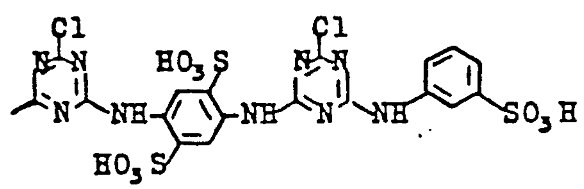

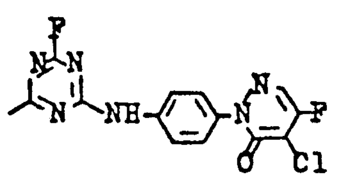

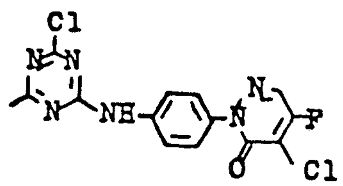

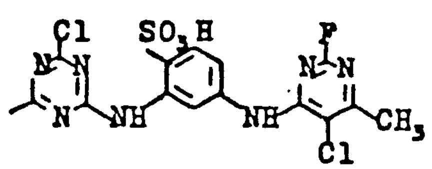

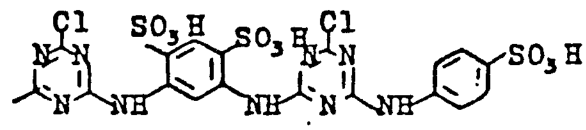

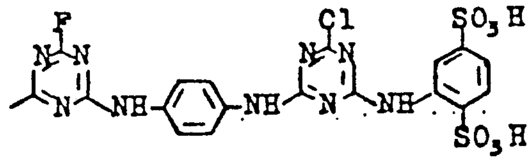

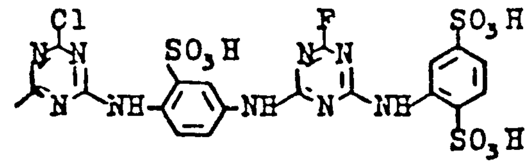

Weiterhin können die reaktiven Halogenatome in den oben genannten 2-Halogen-4-substituierten-triazinyl-Resten unter Bildung quartärer Salze mit tertiären Basen wie Trimethylamin, Triethylamin, Dimethyl-β-hydroxyethylamin, Triethanolamin, N,N-Dimethylhydrazin, Pyridin, α-, Picolin, Nicotinsäure oder Isonicotinsäure zur Reaktion gebracht werden.

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder 5-carboxy- oder -5-cyano- oder -5-vinyl- oder -5-sulfo- oder -5-mono- di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6--Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinoxalin-7- oder -6-sulfonyl- oder -carbonyl-, 2- oder 3- oder 4-(4',5'-Dichlorpyridazon-6'-yl-1')-phenylsulfonyl- oder carbonyl-, β-(4', 5'-Dichlorpyridazon-6'-yl-1')-ethylcarbonyl-, N-Methyl-N- (2,4-dichlortriazinyl-6-)- carbamyl-, N-Methyl-N- (2-methylamino-4- chlor-triazinyl-6)- carbamyl-, N-Methyl-N- 2-dimethylamino-4-chlortriazinyl-6)- carbamyl-, N-Methyl- oder N-Ethyl-N- (2,4-dichlortriazinyl- 6-aminoacetyl-, N-Methyl-N-(2,3-dichlorchin-oxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4- pyrimidinyl, 2-Fluor-5,6-dichlor-4-pyrimidinyl-, 2,6-Difluor-5-methyl-4- pyrimidinyl-, 2-Fluor-5- methyl-6-chlor-4-pyrimidinyl-, 2-Fluor-5-nitro-6-chlor-4-pyrimidinyl, 5-Brom-2-fluor-4- pyrimidinyl-, 2-Fluor-5-cyan- 4-pyrimidinyl-, 2-Fluor-5-cyan- 4-pyrimidinyl-, 2-Fluor-5-methyl- 4-pyrimidinyl-, 2,5,6-Trifluor-4-pyrimidinyl-, 5-Chlor-6-chlormethyl- 2-fluor-4-pyrimidinyl-, 2,6-Difluor-5- brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl- 4-pyrimidinyl-, 2,6-Difluor-5-nitro-4-pyrimidinyl-, 2-Fluor-6-methyl- 4-pyrimidinyl-, 2-Fluor-5-chlor-6- methyl-4-pyrimidinyl-, 2-Fluor-5-chlor-4- pyrimidinyl-, 2-Fluor-6-chlor-4-pyrimidinyl-, 6-Trifluormethyl- 5-chlor-2-fluor- 4-pyrimidinyl-, 6-Trifluormethyl-2-fluor- 4-pyrimidinyl-, 2-Fluor-5-nitro-4-pyrimidinyl-, 2-Fluor-5-trifluormethyl- 4-pyrimidinyl-, 2-Fluor-5-phenyl- oder -5-methylsulfonyl- 4-pyrimidinyl-, 2-Fluor-5-carbonamido-4-pyrimidinyl-, 2-Fluor-5-carbomethoxy- 4-pyrimidinyl-, 2-Fluor-5-brom- 6-trifluormethyl-4-pyrimidinyl-, 2-Fluor-6-carbonamido- 4-pyrimidinyl-, 2-Fluor-6-carbomethoxy-4- pyrimidinyl-, 2-Fluor-6-phenyl- 4-pyrimidinyl-, 2-Fluor-6-cyan-4- pyrimidinyl-, 2-Fluor-4-dichlormethyl-5-chlorpyrimidin-6-yl, 2-Fluor-5-chlor-pyrimidin-4-yl; 2-Methyl-4-fluor-5- methylsulfonylpyrimidinyl-6; 2,6-Difluor-5-methylsulfonyl-4-pyrimidinyl-, 2,6-Dichlor-5-methylsulfonyl- 4-pyrimidinyl, 2-Fluor-5-sulfonamido- 4-pyrimidinyl-, 2-Fluor-5-chlor-6- carbomethoxy-4-pyrimidinyl-, 2,6-Difluor-5-trifluormethyl- 4-pyrimidinyl; sulfonylgruppenhaltige Triazinreste, wie 2,4-Bis-(phenylsulfonyl)-triazinyl-6-, 2-(3'-Carboxyphenyl)- sulfonyl-4- chlortriazinyl-6-, 2-(3'-Sulfo phenyl)-sulfonyl- 4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl- pyrimidinyl-4-, 2-Methylsulfonyl-6-ethylpyrimidinyl-4-, 2-Phenylsulfonyl-5-chlor-6-methyl- pyrimidinyl-4-, 2,6-Bis-methylsulfonylpyrimidinyl-4-, 2,6-Bis-methylsulfonyl- 5-chlor-pyrimidinyl-4-, 2,4-Bis-methylsulfonyl- pyrimidin-5-sulfonyl-, 2-Methylsulfonyl-pyrimidinyl-4, 2-Phenylsulfonyl-pyrimidinyl-4-, 2-Trichlormethylsulfonyl- 6-methyl-pyrimidinyl-4-, 2-Methylsulfonyl-5-chlor-6- methylpyrimidinyl-4-, 2-Methylsulfonyl-5-brom- 6-methyl-pyrimidinyl-4-, 2-Methylsulfonyl-5-chlor-6-ethyl-pyrimidinyl-4-, 2-Methylsulfonyl-5-chlor- 6-chlormethyl-pyrimidinyl-4-, 2-Methylsulfonyl-4-chlor- 6-methyl-pyrimidin-5-sulfonyl-, 2-Methylsulfonyl-5- nitro-6-methyl- pyrimidinyl-4-, 2,5,6-Tris-methylsulfonyl- pyrimidinyl-4-, 2-Methylsulfonyl- 5,6-dimethyl-pyrimidinyl-4-, 2-Ethyl-sulfonyl-5-chlor- 6-methyl-pyrimidinyl-4-, 2-Methyl-sulfonyl- 6-chlor-pyrimidinyl-4-, 2,6-Bis-methylsulfonyl- 5-chlor-pyrimidinyl-4-, 2-Methylsulfonyl-6-carboxy- pyrimidinyl-4-, 2-Methylsulfonyl-5-sulfo- pyrimidinyl-4-, 2-Methylsulfonyl-6-carbomethoxy-pyrimidinyl-4-, 2-Methylsulfonyl-5-carboxy- pyrimidinyl-4-, 2-Methylsulfonyl-5-cyan- 6-methoxypyrimidinyl-4-, 2-Methylsulfonyl-5-chlor- pyrimidinyl-4-, 2-Sulfoethylsulfonyl-6-methyl- pyrimidinyl-4-, 2-Methylsulfonyl-5-brom- pyrimidinyl-4-, 2-Phenylsulfonyl-5-chlor-pyrimidinyl-4-, 2-Carboxymethylsulfonyl- 5-chlor-6-methylpyrimidinyl-4-, 2-Methylsulfonyl-6-chlorpyrimidin-4- oder -5-carbonyl-, 2,6-Bis-(methyl-sulfonyl)- pyrimidin-4- oder -5-carbonyl-, 2-Ethylsulfonyl-6- chlor-pyrimidin-5-carbonyl-, 2,4-Bis-(methylsulfonyl)- pyrimidin- 5-sulfonyl-, 2-Methylsulfonyl-4-chlor-6- methyl-pyrimidin-5 -sulfonyl- oder -carbonyl-, ammoniumgruppenhaltige Triazinringe, wie 2-Trimethylammonium-4-phenylamino- oder -4-(o-, m- oder p-sulfophenyl)-aminotriazinyl-6-, 2-(1,2-Dimethylhydrazinium)- 4-phenylamino- oder -4-(o-, m- oder p-sulfophenyl)- aminotriazinyl-6-, 2-(2-Isopropyliden-1,1-dimethyl)- hydrazinium-4-phenylamino- oder -4-(o-, m- oder p-sulfophenyl)- aminotriazinyl-6-, 2-N-Aminopyrrolidinium- oder 2-N-Aminopiperidinium-4-phenyl-amino- oder -4-(o-, m- oder p-sulfophenyl)- aminotriazinyl-6-, ferner 4-Phenylamino- oder 4-(sulfophenylamino)- triazinyl-6-Reste, die in 2-Stellung über eine Stickstoffbindung das 1,4-Bisazabicyclo[2,2,2]-octan oder das 1,2-Bis-aza-bicyclo- [0,3,3]-octan quartär gebunden enthalten, 2-Pyridinium-4-phenylamino- oder -4-(o-, m- oder p-sulfophenyl)- aminotriazinyl-6- sowie entsprechende 2-Oniumtriazinyl-6-Reste, die in 4-Stellung durch Alkylamino-, wie Methylamino-, Ethylamino- oder β-Hydroxyethylamino-, oder Alkoxy-, wie Methoxy- oder Alkoxy-, oder Aroxy-, wie Phenoxy- oder Sulfophenoxy-Gruppen substituiert sind; 2-Chlorbenzthiazol-5- oder -6-carbonyl- oder -5- oder -6-sulfonyl-, 2-Arylsulfonyl- oder -Alkylsulfonylbenzthiazol-5- oder -6-sulfonyl-, wie 2-Methylsulfonyl- oder 2-Ethylsulfonyl- benzthiazol-5- oder -6-sulfonyl- oder -carbonyl-, 2-Phenylsulfonylbenzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder sulfonyl-, 2-Chlor-4-methylthiazol- (1,3)-5-carbonyl- oder -4- oder -5-sulfonyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlor-propionyl-, 3-Phenylsulfonylpropionyl-, 3-Methylsulfonyl-propionyl-, β-Sulfato-ethylaminosulfonyl-, Vinylsulfonyl-, β-Chlorethylsulfonyl-, β-Sulfatoethylsulfonyl-, β-Phosphatoethylsulfonyl, β-Thiosulfatoethylsulfonyl, β-Methyl-sulfonylethylsulfonyl-, β-Phenylsulfonylethylsulfonyl-, 2-Fluor-2-chlor-3,3-difluorcyclobutan- 1-carbonyl-, 2,2,3,3-Tetrafluorcyclobutan-carbonyl-1- oder sulfonyl-1-, β-(2,2,3,3-Tetrafluorcyclobutyl-1)- acryloyl-, α- oder β-Bromacryloxyl-α-oder β-Alkyl- oder Arylsulfo-

nyl-acryloyl-Gruppe, wie α- oder β-Methylsulfonylacryloyl, α,β-Dichlor- und Dibrompropionyl.

Bevorzugte faserreaktive Reste sind jedoch solche, die mindestens einen reaktiven Substituenten an einem 5- oder 6-gliedrigen heterocyclischen Ring gebunden enthalten.

Bevorzugt sind Farbstoffe der Formeln

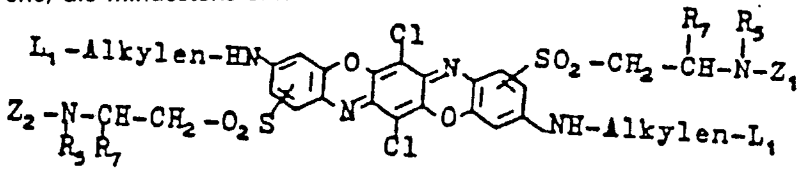

(II)

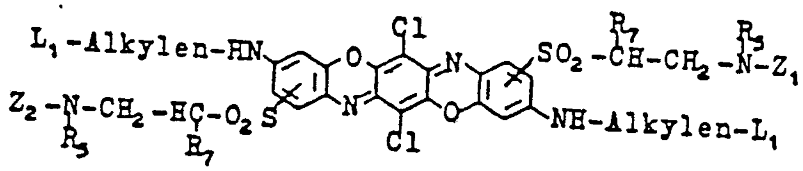

(III)

worin $R_5$, $Z_1$, $Z_2$ die oben angegebene Bedeutung haben, Alkylen = $C_1$–$C_6$-Alkylen

$L_1$ = H, $SO_3H$, $OSO_3H$, COOH,

$R_7$ = H, $CH_3$

$R_5$ steht bevorzugt für $C_1$–$C_3$-Alkyl, gegebenenfalls substituiert durch OH, $OSO_3H$, $SO_3H$, COOH, $OPO_3H_2$,

weiterhin solche der Formeln

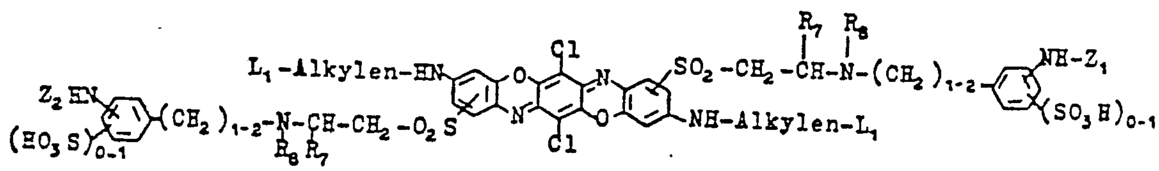

(IV)

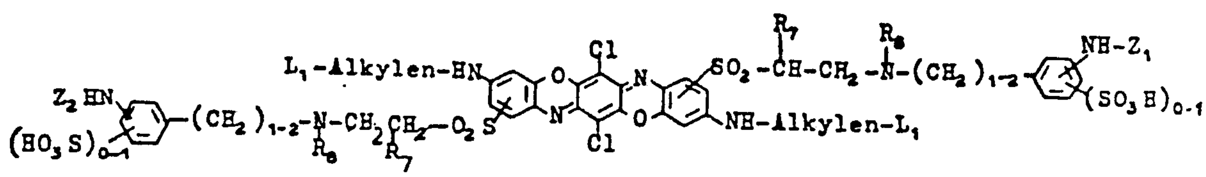

(V)

worin

Alkylen, $L_1$, $R_7$, $Z_1$ und $Z_2$ die oben angegebene Bedeutung haben und

$R_8$ = H, $C_1$–$C_2$-Alkyl

weiterhin bevorzugte Farbstoffe sind solche der Formel

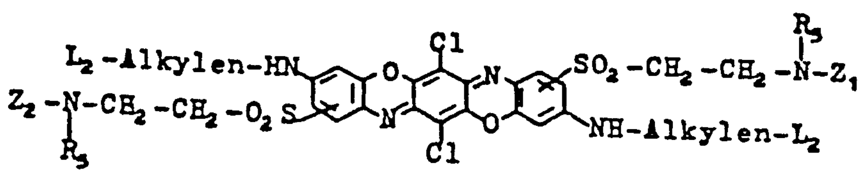

(VI)

worin Alkylen, $R_5$, $Z_1$, $Z_2$ die oben angegebene Bedeutung haben und

$L_2$ = $SO_3H$, $OSO_3H$,

sowie Farbstoffe der Formel

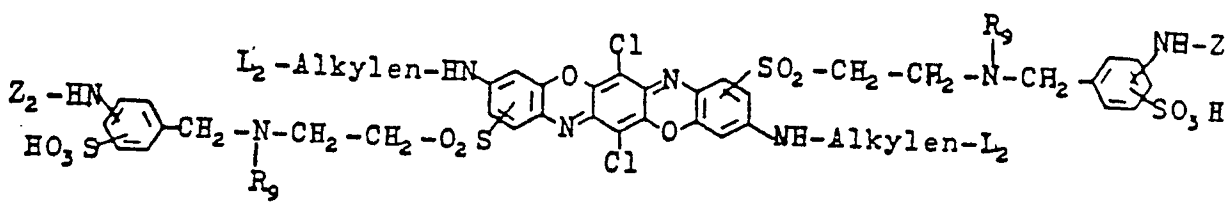

(VII)

worin Alkylen, $L_2$, $Z_1$, $Z_2$ die oben angegebene Bedeutung haben und

$R_9$ = H, $CH_3$.

Generell sind solche Farbstoffe bevorzugt, in denen $Z_1$ und $Z_2$ für den Rest eines Halogentriazins oder Halogenpyrimidins stehen, speziell für Monochlor- bzw. Monofluor-triazinyl- oder Fluorpyrimidinylreste.

Farbstoffe der Formel (I) mit $Z_1$, $Z_2$ = faserreaktiver Rest werden in an sich bekannter Weise erhalten durch Kondensation von Verbindungen der Formel

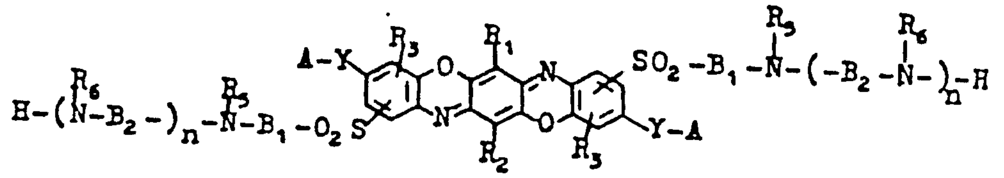

(VIII)

worin

$R_1$–$R_3$, Y, A, $R_5$, $R_6$, $B_1$, $B_2$ und n die oben angegebene Bedeutung haben

mit Reaktivkomponenten

Z-Halogen (IX)

worin

Z = faserreaktiver Rest

Halogen = F, Cl, Br

Die Kondensation der Dioxazin-Verbindungen der Formeln (VIII) und der Reaktivkomponenten (IX) wird entweder in wässrigem oder wässrig-organischem Medium in Abhängigkeit von der eingesetzten Reaktivkomponente bei Temperaturen von 0–80 °C und pH-Werten von 3–9 in Gegenwart alkalischer Kondensationsmittel wie wässriger Alkalihydrogencarbonat-, Alkalicarbonat-, Alkalihydroxid-, Alkalihydrogenphosphat-, Dialkalihydrogen-phosphat- oder Trialkaliphosphat-Lösung durchgeführt, oder aber die Kondensation wird in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylamin, N,N-Dialkylanilin, Pyridin oder Alkylpyridinen bei Temperaturen von 0–80 °C vollzogen.

Die Herstellung von Verbindungen der Formel (VIII) kann erfolgen beispielsweise aus Verbindungen der Formel

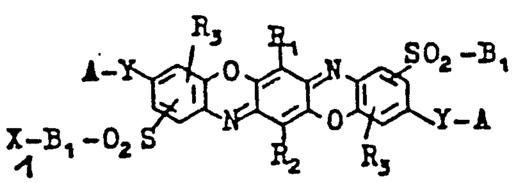

(X)

worin

$R_1$–$R_3$, Y, A und $B_1$ die oben angegebene Bedeutung haben und

$X_1$ = unter alkalischen Bedingungen apspaltbarer Rest wie Halogen, $OSO_3H$, $S_2O_3H$, $OPO_3H_2$, $OCOCH_3$

analog, wie in der Deutschen Offenlegungsschrift 33 40 274 beschrieben, durch Umsetzung mit Verbindungen der Formel

$$\underset{R_5}{HN}-(B_2-\underset{R_6}{N})_n-H \qquad (XI)$$

worin $R_5$, $R_6$, $B_2$ und n die oben angegebene Bedeutung haben.

Die Umsetzung der Verbindungen (X) mit den Aminoverbindungen (XI) kann in Lösungen der Aminoverbindungen in Wasser, wässrig organischen oder organischen Lösungsmitteln oder auch in flüssigen Aminen selbst bei Temperaturen von 0–120° vorzugsweise bei 20–70° vorgenommen werden.

Die Herstellung von Verbindungen der Formel (X) wird nach an sich bekannten Methoden durch Kondensation von 1,4-Benzochinonen der Formel

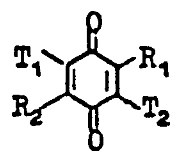

(XII)

worin

$R_1$, $R_2$ die oben angegebene Bedeutung haben und $T_1$, $T_2$ Wasserstoff, Cl, Br, O-Alkyl oder O-Aryl bedeuten, mit 5-Amino-2-(Y-A-substituierten)-benzol-sulfonen der Formel

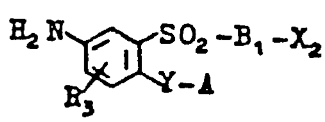

(XIII)

worin

$R_3$, Y, A und $B_1$ die oben angegebene Bedeutung haben und $X_2$ = OH oder $X_1$,

zu Verbindungen der Formel

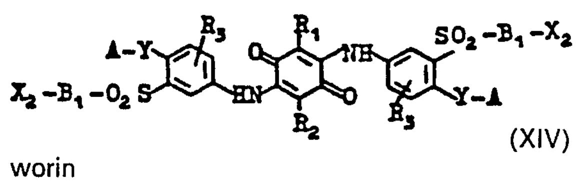

(XIV)

worin

$R_1$–$R_3$, Y, A, $B_1$ und $X_2$ die oben angegebene Bedeutung haben, und nachfolgenden Ringschluss der Anilverbindungen (XIV) zu den Triphendioxazinverbindungen (X), gegebenenfalls unter gleichzeitiger, vorheriger oder nachfolgender Substitution von $X_2$ durch $X_1$ vorgenommen.

Je nach den beim Ringschluss angewandten Reaktionsbedingungen kann die Sulfongruppe bei den Dioxazinen (X) in den Benzringen des Dioxazinsystems entweder inden o- oder in den p-Stellungen zu den Ringsauerstoffatomen des Dioxazin-Systems auftreten.

Die Kondensation der Benzochinone der Formel (XII) mit den Aminobenzolsulfonen (XIII) erfolgt am besten in wässrigem oder wässrig-organischem Medium unter Zugabe alkalischer Kondensationsmittel bei pH-Werten von 3–11, vorzugsweise 4–8, und Temperaturen von 20–90 °C, vorzugsweise 40–70° oder in gepufferten Lösungen, die obige alkalische Kondensationsmittel

enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte der Formel (XIV) als schwerlösliche, braune Produkte aus.

Eine Variante zur Herstellung von Verbindungen der Formel (VIII) besteht in der Kondensation von 1,4-Benzochinonen der Formel (XII) mit 5-Amino-2(y-A-substituierten)- benzol-sulfonen der Formel

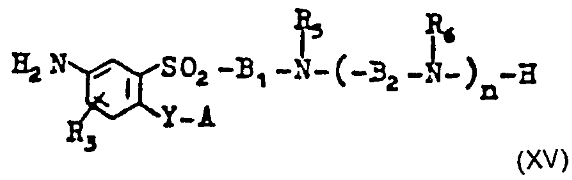

(XV)

worin A, Y, $R_3$, $R_5$, $R_6$, $B_1$, $B_2$ und n die oben angegebene Bedeutung haben, zu Anilverbindungen der Formel

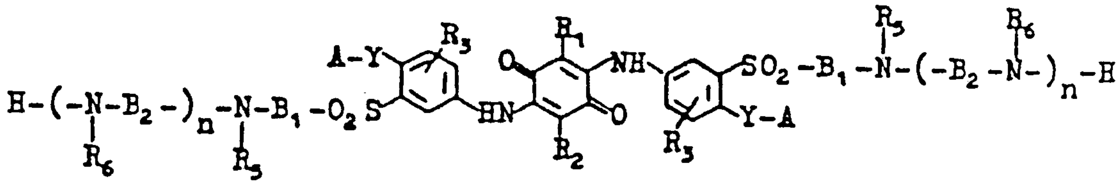

(XVI)

worin A, Y, $B_1$, $B_2$, $R_1$–$R_3$, $R_5$, $R_6$ und n die oben angegebene Bedeutung haben, und deren Ringschluss zu den Triphendioxazinverbindungen (VIII).

Eine weitere Variante zur Herstellung von Verbindungen der Formeln (XIV) bzw. (XVI) besteht in der Addition von Aminobenzolsulfonen (XIII) oder (XV) an 1,4-Benzochinone der Formel

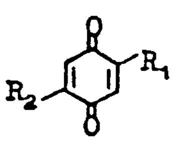

(XV)

worin $R_1$ und $R_2$ die oben angegebene Bedeutung haben, und der Oxidation der primär entstehenden Addukte.

Der Ringschluss der Chinonkondensationsprodukte (XIV) und (XVI) kann nach an sich bekannten Methoden, wie sie in den Deutschen Offenlegungsschriften 2 122 262, 2 124 080, 2 302 382, 2 344 781, 2 503 611, 2 823 828 und in der Britischen Patentschrift 2 019 872 erwähnt sind, insbesondere in konzentrierter Schwefelsäure und vor allem in Oleum mit $SO_3$-Gehalten von 1–50% bei Temperaturen von 10–80 °C gegebenenfalls mit Zusatz von Oxidationsmitteln wie Kalium- oder Ammoniumperoxidisulfat oder organischen Peroxiden vorgenommen werden.

Die neuen Farbstoffe im Nuancenbereich blau sind wertvolle Produkte, die sich durch hohe Farbstärken auszeichnen. Sie eignen sich in dispergierter oder gelöster Form für die verschiedensten Anwendungszwecke.

In Form wasserlöslicher Verbindungen finden sie bevorzugtes Interesse für das Färben hydroxyl- und amidgruppenhaltiger Textilmaterialien, insbesondere von Materialien aus nativer und regenerierter Cellulose sowie synthetischen Polyamid- und Polyurethanfasern, Wolle und Seide.

Handelt es sich um wasserlösliche Reaktivfarbstoffe, so werden die genannten Materialien nach den für Reaktivfarbstoffe allgemein üblichen Verfahren gefärbt oder bedruckt. Man erhält dann licht- und nassechte blaue Färbungen und Drucke.

Bei Temperaturangaben in den Beispielen handelt es sich um °C. Die Formeln der wasserlöslichen Farbstoffe in der Beschreibung und in den Beispielen sind die freien Säuren. Handelt es sich um Reaktivfarbstoffe, dann werden diese in der Regel in Form ihrer Alkalisalze, insbesondere der Natrium- oder Kaliumsalze, isoliert und angewandt.

In der EP-A 0 053 743 sind Dioxazin-Reaktivfarbstoffe beschrieben, welche den faserreaktiven Rest über eine Sulfonamidgruppe an den Chromophor gebunden enthalten.

Beispiel 1

20,0 g eines Chloranilkondensationsproduktes der Formel

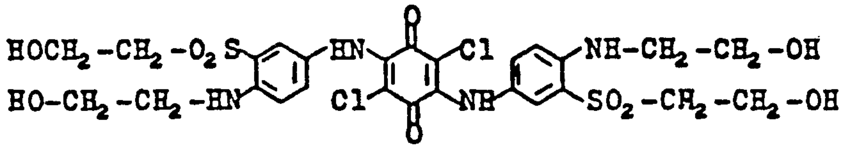

werden bei 10–20° in 50 ml 20%iges Oleum innerhalb etwa einer Stunde eingetragen. Zur vollständigen Lösung rührt man 30 bis 60 Minuten nach und trägt dann in die dickflüssige Masse 15,6 g Kaliumperoxydisulfat in etwa 45 Minuten bei 20–25° unter leichter Aussenkühlung ein. 30 Minuten nach dem Eintragen ist die Reaktion beendet. Man rührt das Reaktionsgemisch in 400 g Eis ein und salzt aus der Lösung die erhaltene Dioxazinverbindung mit Kaliumchlorid aus. Der ausgefallene Niederschlag wird abgesaugt und mit Kalimchloridlösung sulfatfrei gewaschen. Das erhaltene Produkt wird bei 50 °C im Umluftschrank getrocknet. Es entspricht der Formel

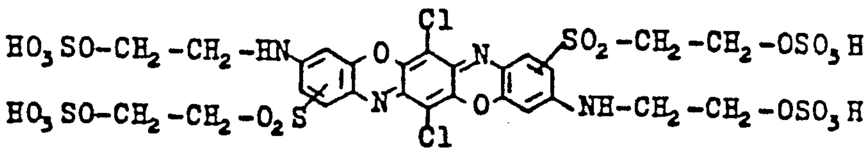

Das zu Beginn des Beispiels 1 eingesetzte Chloranil-Kondensationsprodukt wird auf folgende Weise hergestellt:

35 g 5-Nitro-2-β-hydroxyethylaminobenzol-β-hydroxyethylsulfon werden in 200 ml Methanol suspendiert (Autoklav). Nach Zusatz von 2 g Raney Nickel drückt man 10 bis 20 bar Wasserstoff auf und heizt auf 45°, bis nach weiterem Aufdrücken von Wasserstoff kein Verbrauch mehr erfolgt. Man filtriert die erhaltene Lösung oder Suspension bei 50° vom Nickel ab, wäscht mit Wasser wenig nach und setzt zu dem Filtrat 14,4 g 2,3,5,6-Tetrachlorchinon und 16 g wasserfreies Natriumacetat. Die Mischung wird nun unter Rückfluss 2 Stunden erhitzt, bis kein Tetrachlorchinon mehr nachweisbar ist. Das in Form eines braunen Niederschlages ausgefallene Kondensationsprodukt wird abgesaugt, mit Methanol oder Methanolwasser gewaschen und bei 60° im Umluftschrank getrocknet.

Man kann den oben beschriebenen oxydativen Ringschluss auch ohne Zusatz von Peroxidisulfat in 30–35%igem Oleum bei 50–55° ausführen und erhält dann ebenfalls das obiger Formel entsprechende Triphendioxazin.

Beispiel 2

25,0 g Triphendioxazinverbindung der Formel

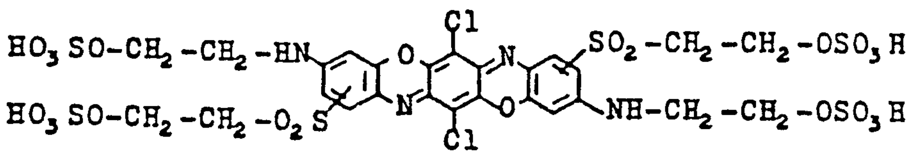

in Form des Kaliumsalzes werden in 250 ml Wasser gelöst. Man gibt 15 g 30%ige Methylaminlösung zu und lässt mehrere Stunden bei 20° bis zur vollständigen Umsetzung rühren. Nach beendeter Umsetzung stellt man den pH-Wert mit Salzsäure auf 8,0, saugt die Fällung ab und wäscht sie mit Natriumchloridlösung.

Den erhaltenen Filterkuchen suspendiert man in 280 ml Wasser und stellt mit 21 ml 2n Natronlauge einen pH-Wert von 12,5 ein, wodurch eine Lösung der Farbkomponente erhalten wird.

16,0 g 2-Aminobenzol-1,4-disulfonsäure werden in 50 ml Wasser bei pH 5 gelöst. In die Lösung tropft man bei 0–5° 5,8 ml Cyanurfluorid innerhalb 5 Minuten ein und hält den pH-Wert mit 2n Sodalösung auf 4,2–4,7.

Die oben hergestellten Lösungen der Farbkomponente und der Reaktivkomponente lässt man in 50 ml vorgelegtes Eis-Wasser innerhalb von 15–20 Minuten bei 0–5° so eintropfen, dass sich in dem Reaktionsgemisch ein pH-Wert 7,5–7,8 einstellt, was durch gelegentliche Zugabe von in Natronlauge eingehalten wird.

Sind die Lösungen beider Komponenten eingetragen, hält man den pH-Wert noch mehrere Stunden ein und lässt anschliessend die Temperatur unter weiterer pH-Kontrolle auf 20° ansteigen. Wenn keine Natronlauge mehr aufgenommen wird, salzt man aus der blauen Lösung den Farbstoff mit 20% Kaliumchlorid aus, saugt die Fällung ab, wäscht den Filterkuchen mit 20%iger Kaliumchloridlösung und trocknet ihn bei 40° im Vakuum.

Der Farbstoff entspricht der Formel

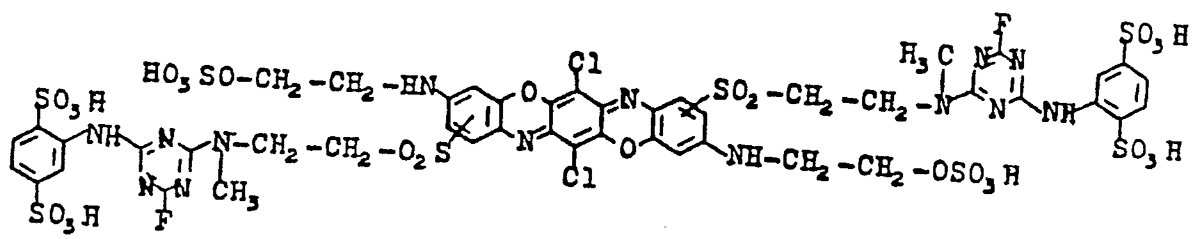

und gibt auf Cellulosefasern klare blaue Färbungen und Drucke (C.I. Indicator Number 13).

Beispiel 3

25,0 g Triphendioxazinverbindung der Formel

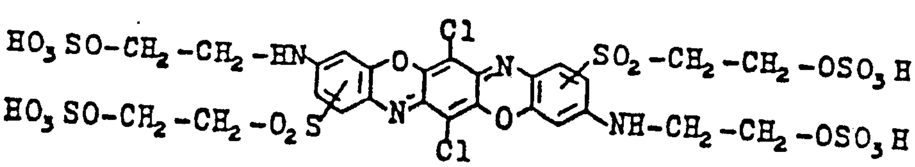

in Form des Kaliumsalzes werden in 200 g einer 10%igen Lösung von 2-aminoethylsulfonsaurem Natrium bei 20° eingetragen. Im Laufe einiger Stunden sinkt der pH-Wert von etwa 13 auf 10,5 ab. Nach beendeter Umsetzung neutralisiert man die Lösung und salzt den Farbkörper mit Kaliumchlorid aus, saugt ihn ab, wäscht ihn mit Kaliumchloridlösung. Eine andere Möglichkeit zur Isolierung des Farbkörpers besteht im Zusatz von Methanol, Absaugen der Fällung und Waschen mit Methanol. Das getrocknete Produkt wird in 300 ml Wasser gelöst. Man lässt nun 5,3 ml 2,4,6-Trifluor-5-chlorpyrimidin zutropfen und hält durch gleichzeitige Zugabe von 1n Natronlauge den pH-Wert auf 7,5–7,8. Nach Abklingen des Natronlaugeverbrauches und beendeter Kondensation wird die Farbstofflösung mit 23% Kaliumchlorid versetzt und die Suspension zur Vervollständigung der Fällung mehrere Stunden gerührt. Die Fällung wird abgesaugt und der Filterkuchen wird bei 50° im Umluftschrank getrocknet.

Der erhaltene Farbstoff entspricht der Formel

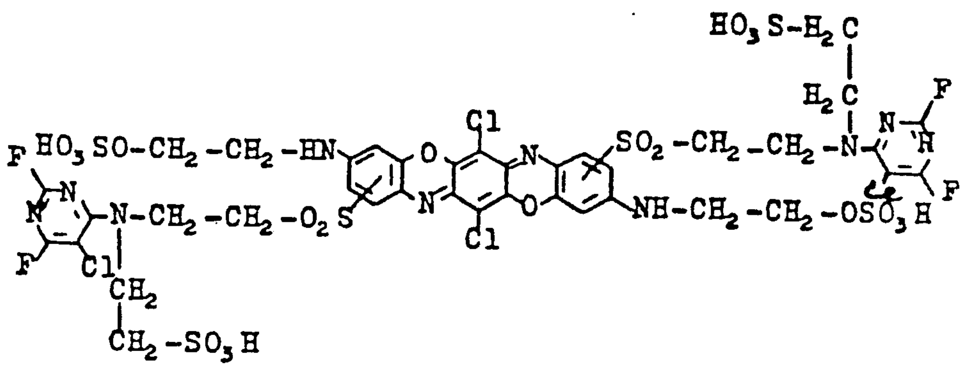

und gibt auf Wolle und Cellulosefasern licht- und nassechte blaue Färbungen und Drucke (C.I. Indicator Number 13).

Beispiel 4

25 g Triphendioxazinverbindung der Formel

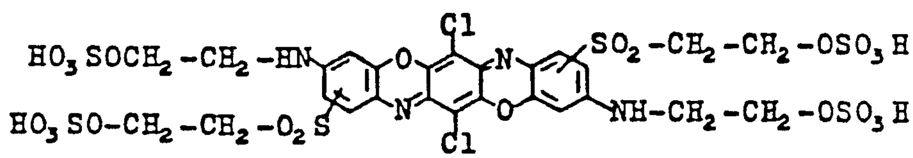

werden in 250 ml Wasser mit 12 g Natrium-2-(N-methylamino) methyl-5-aminobenzolsulfonat angerührt. Dazu tropft man langsam 10 ml konz. Natronlauge. Nach einstündiger Nachrührzeit stellt man mit Salzsäure auf pH 7, fügt 50 g Eis und 5,3 ml 2,4,6-Trifluor-5- chlorpyrimidin zu und hält durch gleichzeitige Zugabe von 20%iger Sodalösung den pH-Wert auf 7,0–8,0. Nachdem keine pH-Änderung mehr zu beachten ist, salzt man bei pH 6,5 mit 15 g Kochsalz aus, saugt ab und trocknet bei 70 °C i. Vak. Der resultierende Farbstoff der Formel

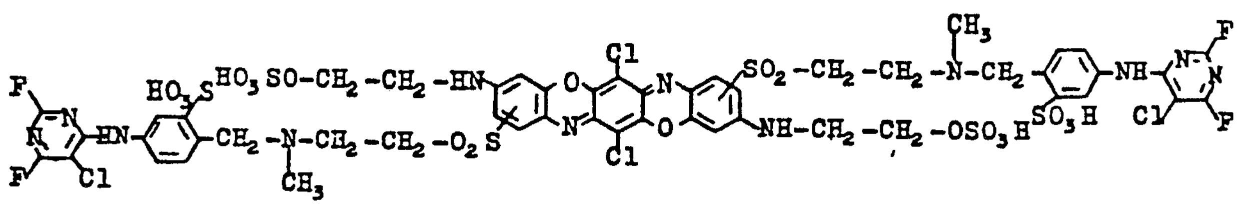

gibt auf Wolle oder Baumwolle nassechte Blaufärbungen (C.I. Indicator Number 13).

Setzt man anstelle von 2,4,6-Trifluor-5-chlorpyrimidin das 2,4-Difluor-5-chlor-6-methylpyrimidin ein, so erhält man einen analogen Farbstoff, mit dem Baumwolle in klaren blauen bis dunklen marineblauen Tönen zu bedrucken ist.

Beispiel 5

20,0 g Triphendioxazinverbindung der Formel

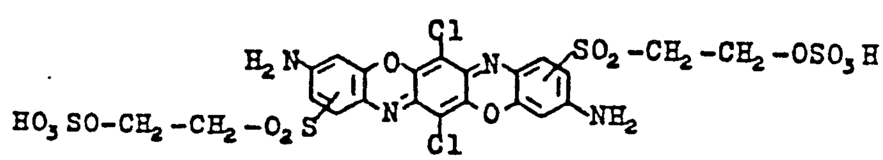

in Form des Natriumsalzes, hergestellt aus Chloranil und 2,5-Diaminobenzol-β-hydroxyethylsulfon, werden in eine Lösung von 15 g 2-aminoethylsulfonsaurem Natrium in 250 ml Wasser eingetragen und die Suspension 1 Stunde auf 70–75° erwärmt. Nach Abkühlen auf Raumtemperatur auf 70–75° erwärmt. Nach Abkühlen auf Raumtemperatur stellt man den pH-Wert auf 7 ein, setzt Natriumchlorid zu der Suspension und saugt ab. Man wäscht mit 15%iger Natriumchloridlösung und anschliessend mit einer Mischung von Methanol-Wasser im Volumenverhältnis 1:1. Der erhaltene Filterkuchen wird im Vakuum bei 50° getrocknet.

12,6 g 2-Aminobenzol-1,4-disulfonsäure werden in 50 ml Wasser bei pH 5 gelöst. In die Lösung tropft man bei 0–5° 4,6 ml Cyanurfluorid innerhalb 5 Minuten ein und hält den pH-Wert mit 2n Sodalösung auf 4,2–4,7. Man rührt unter diesen Bedingungen noch 20 Minuten nach. Zu der erhaltenen Lösung der Reaktivkomponente lässt man eine Lösung von 15,0 g des obigen getrockneten Filterkuchens in 300 ml Wasser bei 0–5° in wenigen Minuten eintropfen und hält den pH-Wert im Reaktionsgemisch mit 1n Natronlauge auf 7,5–8. Nach 4 Stunden lässt man die Temperatur unter ständiger pH-Wertkontrolle auf 20° ansteigen.

Man salzt den Farbstoff aus der Lösung mit Kaliumchlorid aus, saugt ab und wäscht mit gesättigter Kaliumchloridlösung. Alternativ kann man die Lösung im Rotationsverdampfer eindampfen oder einer Sprühtrocknung unterwerfen.

Man erhält ein blaues Pulver, dessen Farbstoffkomponente der Formel

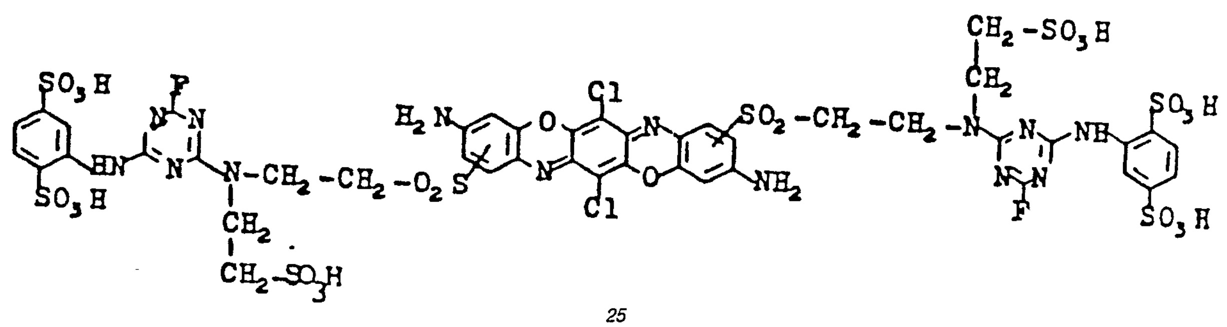

entspricht. Auf Baumwolle und Zellwolle werden nach den für Reaktivfarbstoffe bekannten Färbeverfahren licht- und nassechte, klare rotstichig blaue Färbungen und Drucke erhalten (C.I. Indicator Number 13).

Beispiel 6

Ersetzt man in Beispiel 2 die 2-(2,4-difluor-6-triazinyl)- amino-benzol-1,4- disulfonsäure durch eine äquivalente Menge 2-(2,4-Difluor-6-triazinylamino)- benzol-1-sulfonsäure, so erhält man einen Farbstoff, der Cellulosefasern ebenfalls in klaren Blautönen färbt und druckt und dem die Formel

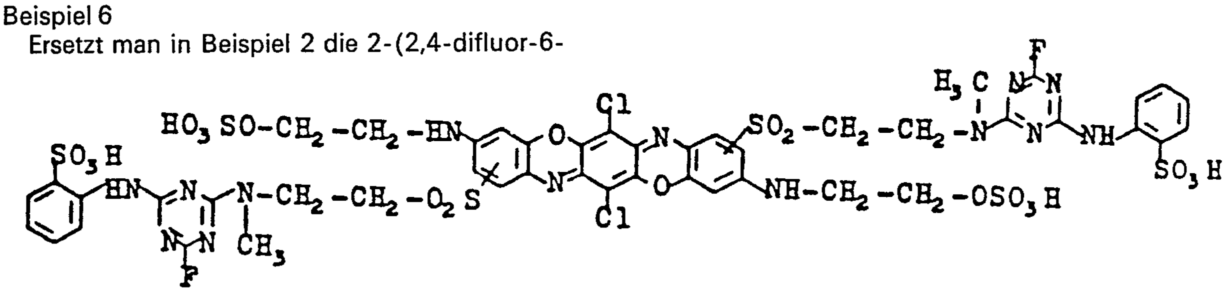

entspricht. (C.I. Indicator Number 13).

Beispiel 7

20,0 g des im Beispiel 3 hergestellten Farbkörpers der Formel

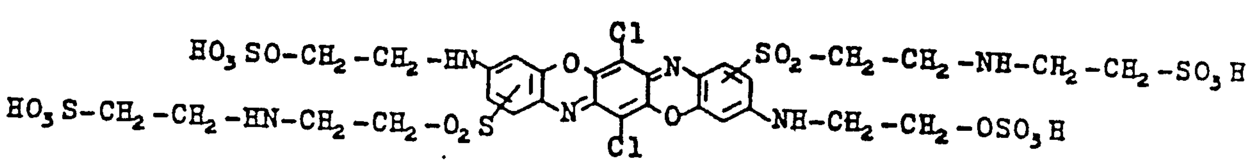

werden in 250 ml Wasser gelöst. Man kühlt die Lösung auf 0°–5° ab und gibt eine Suspension der Reaktivkomponente zu, die durch Kondensation von 8,8 g 2-Aminobenzolsulfonsäure in 100 ml Wasser und 5,0 ml Cyanurfluorid bei 0–5° und pH 4,2–4,7 hergestellt wurde. Der pH-Wert im Reaktionsgemisch wird mit 1n-Natronlauge auf 7,5–8,0 gehalten.

Man rührt die Lösung unter pH-Kontrolle über Nacht weiter und erwärmt sie dann auf 20°. Wird keine Natronlauge mehr verbraucht, salzt man den Farbstoff mit Kaliumchloridlösung aus und trocknet ihn im Vakuum bei 40°.

Er entspricht der Formel

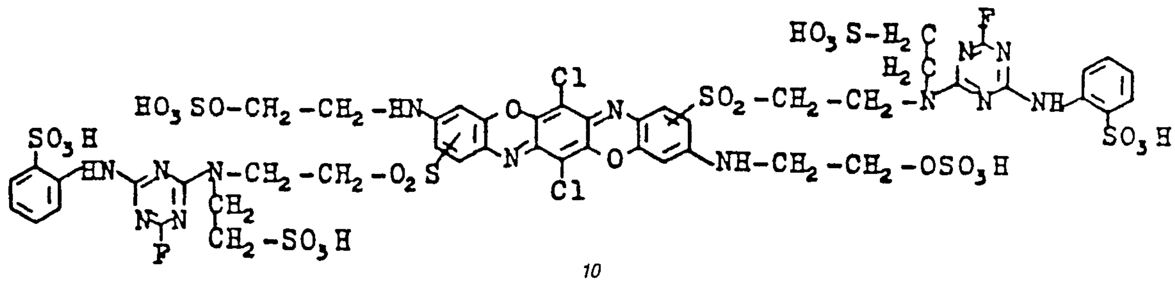

und gibt auf Baumwolle licht- und nassechte klare blaue Färbungen und Drucke (C.I. Indicator Number 13).

Weitere blaue Reaktivfarbstoffe der Triphendioxazin-Reihe (C.I. Indicator Number 13), die geeignet sind für das Färben und Bedrucken von Cellulose-, natürlichen und synthetischen Polyamidfasern, erhält man wenn man die Triphendioxazin-sulfon-Komponenten der Spalte 2 mit den Reaktivkomponenten der Spalte 3 der folgenden Tabelle kondensiert.

| Beispiel | Triphendioxazin-sulfon-Komponente | Reaktivkomponente |
| --- | --- | --- |
| 8 | 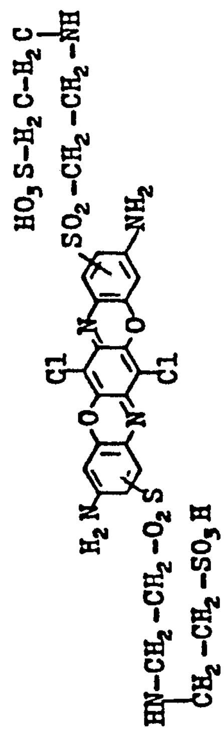 | 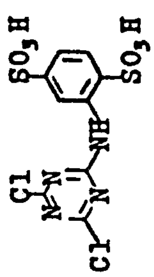 |
| 9 | " | 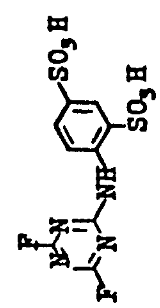 |
| 10 | 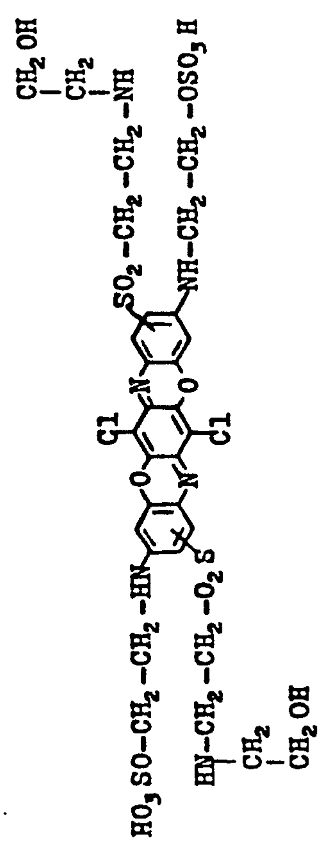 | 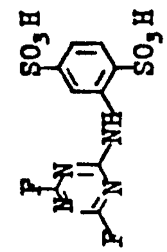 |
| 11 | 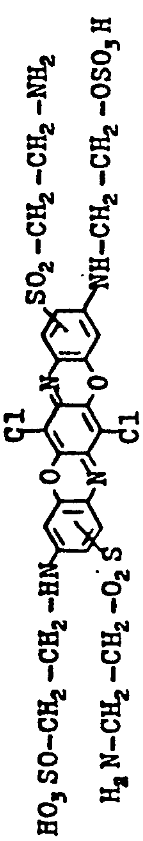 | 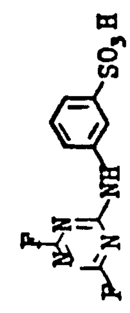 |

Tabelle (Fortsetzung)

| Beispiel | Triphendioxazin-sulfon-Komponente | Reaktivkomponente |
|---|---|---|
| 12 | 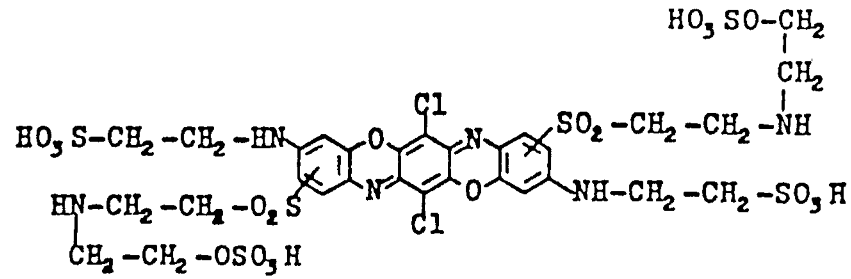 | 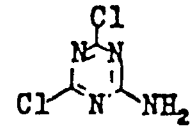 |
| 13 | 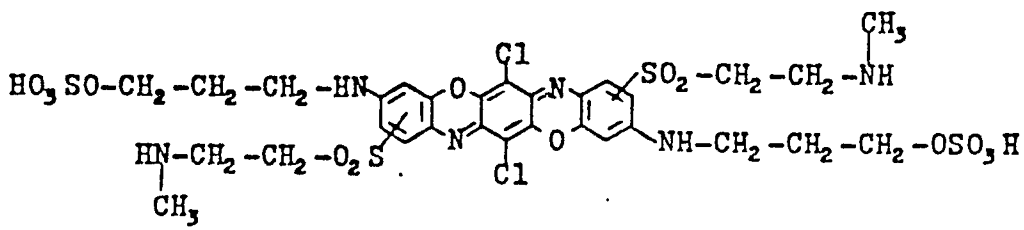 | 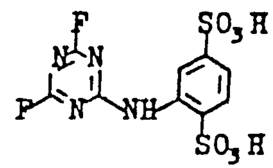 |
| 14 | 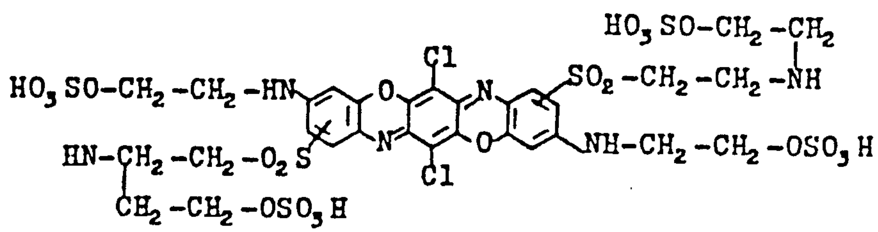 | 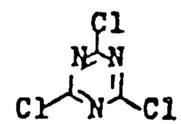 |
| 15 | 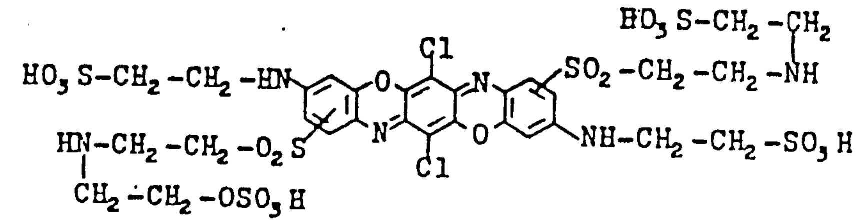 | 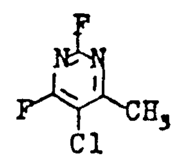 |

Tabelle (1. Fortsetzung)

| Beispiel | Triphendioxazin-sulfon-Komponente | Reaktivkomponente |
|---|---|---|
| 16 | 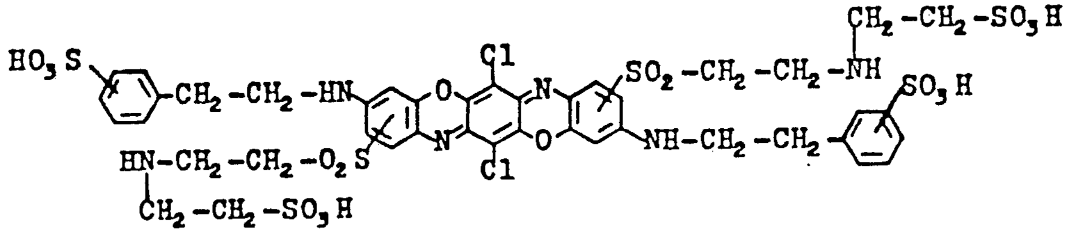 | 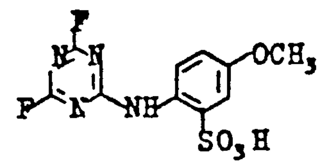 |
| 17 | 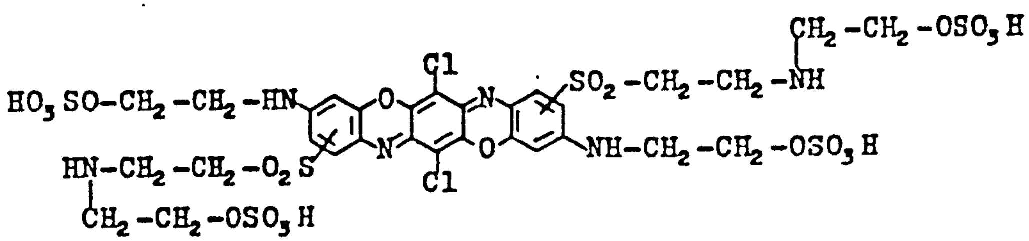 | 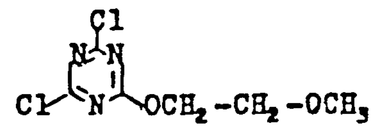 |
| 18 | " | 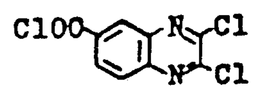 |
| 19 | 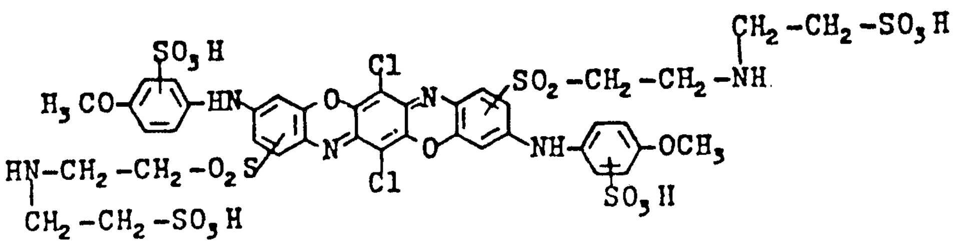 | 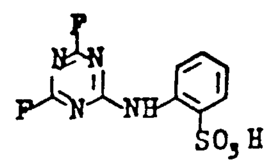 |

Tabelle (2. Fortsetzung)

| Beispiel | Triphendioxazin-sulfon-Komponente | Reaktivkomponente |
|---|---|---|
| 20 | 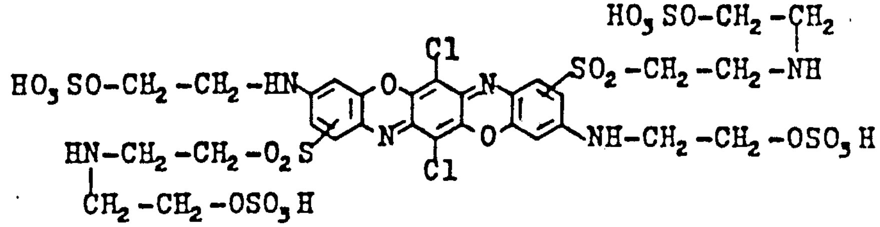 | 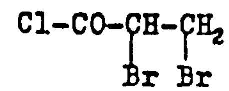 |
| 21 | " | 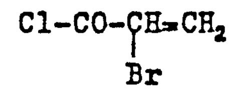 |
| 22 | 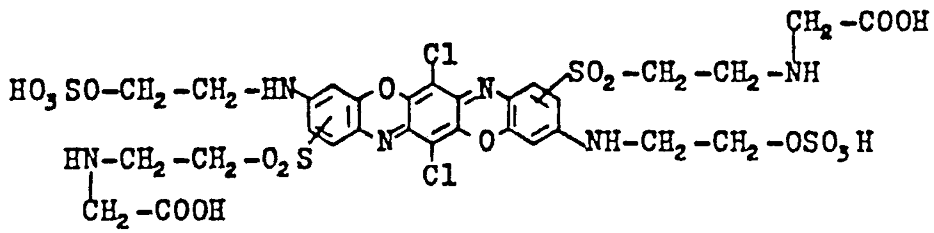 | 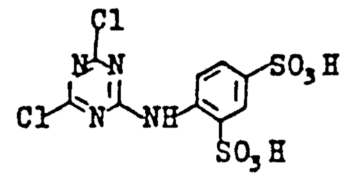 |
| 23 | 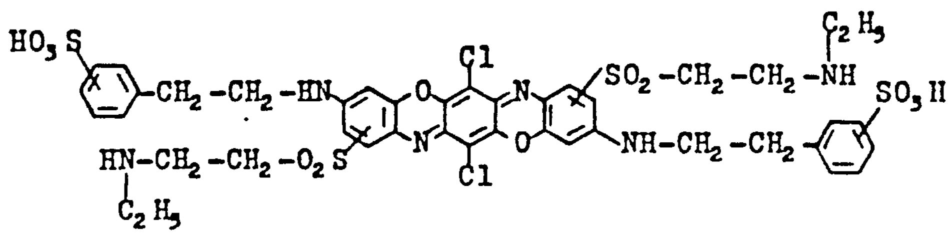 | 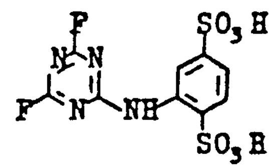 |
| 24 | " | 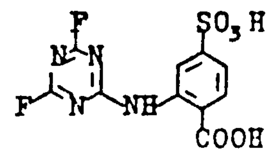 |

Tabelle (3. Fortsetzung)

| Beispiel | Triphendioxazin-sulfon-Komponente | Reaktivkomponente |
|---|---|---|
| 25 | 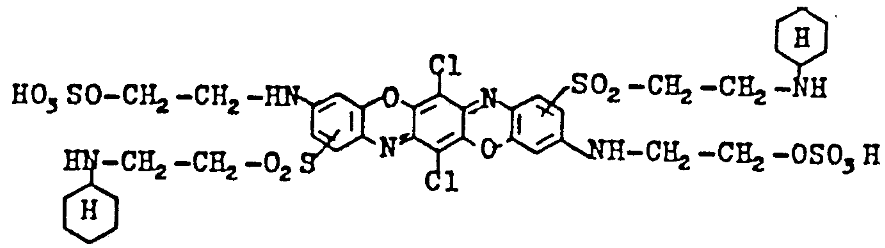 | 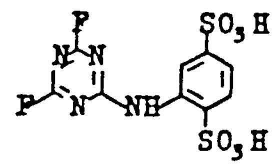 |
| 26 | 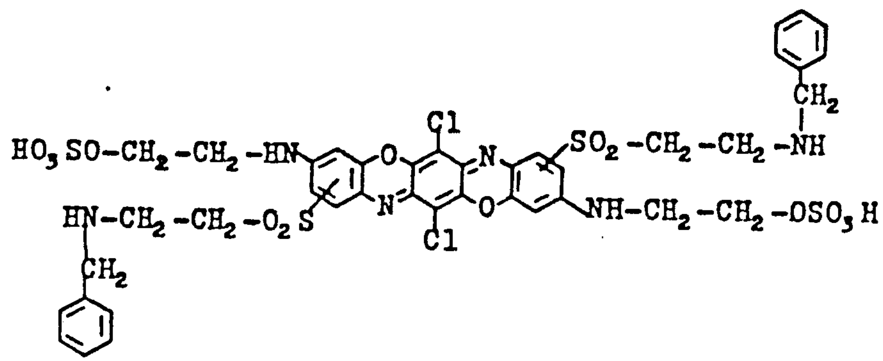 | 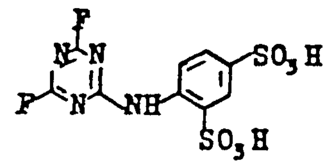 |
| 27 | 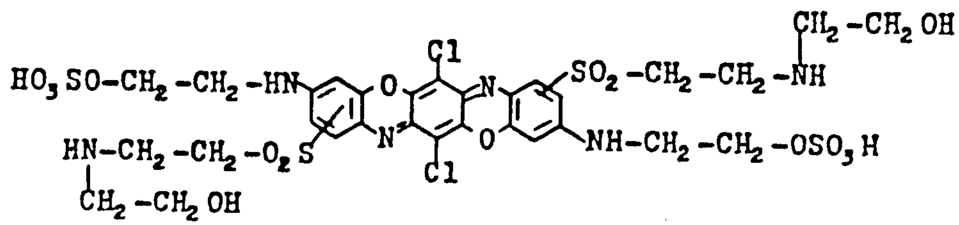 | 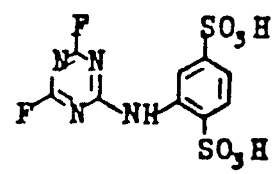 |
| 28 | " | 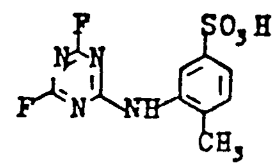 |

Tabelle (4. Fortsetzung)

| Beispiel | Triphendioxazin-sulfon-Komponente | Reaktivkomponente |
|---|---|---|
| 29 | 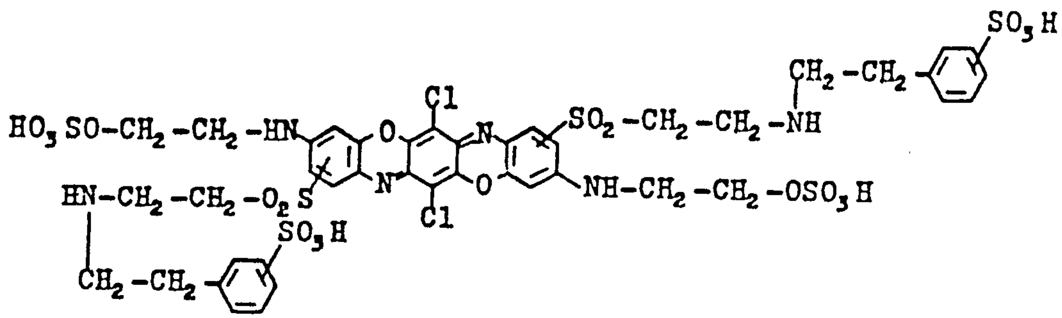 | 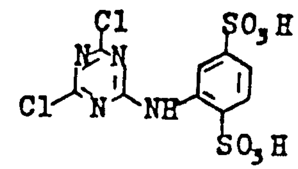 |
| 30 | 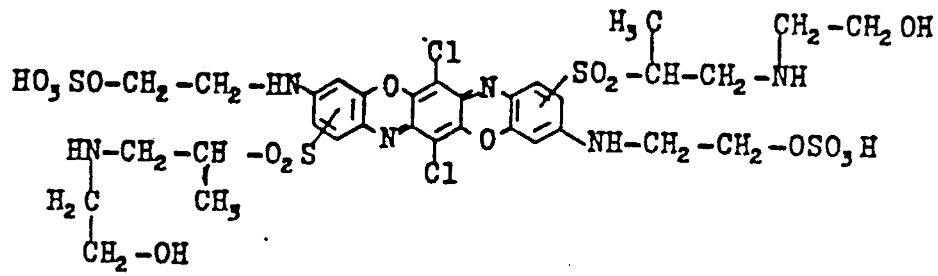 | 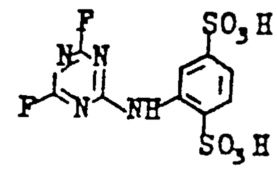 |
| 31 | 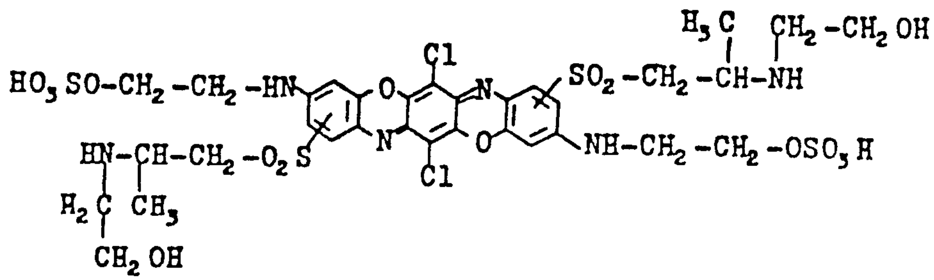 | " |

Tabelle (5. Fortsetzung)

| Beispiel | Triphendioxazin-sulfon-Komponente | Reaktivkomponente |
|---|---|---|
| 32 | 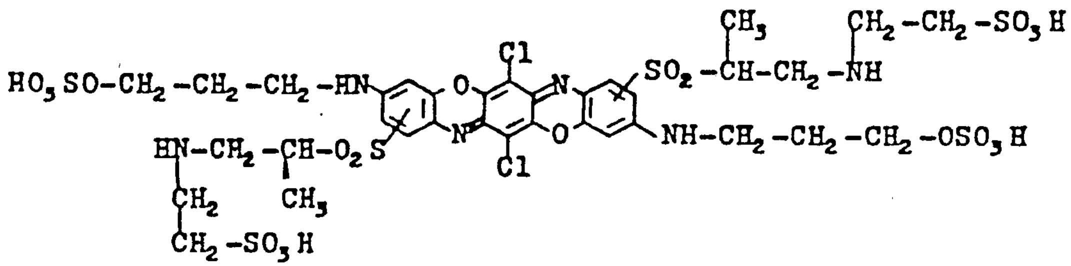 | 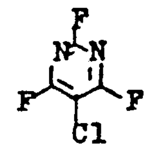 |
| 33 | 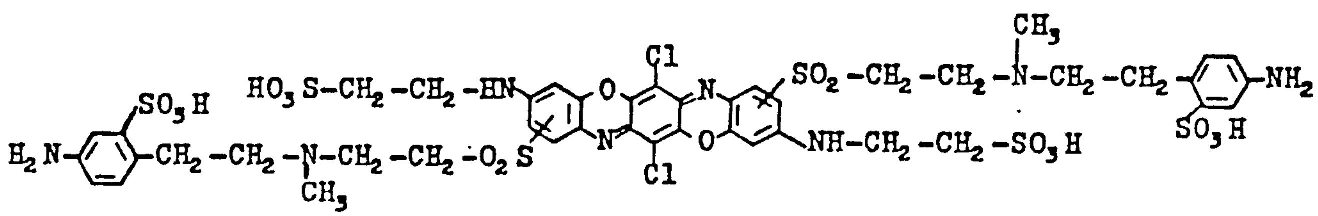 | 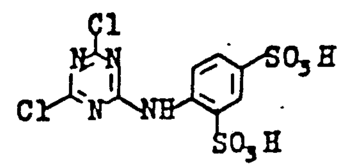 |
| 34 | 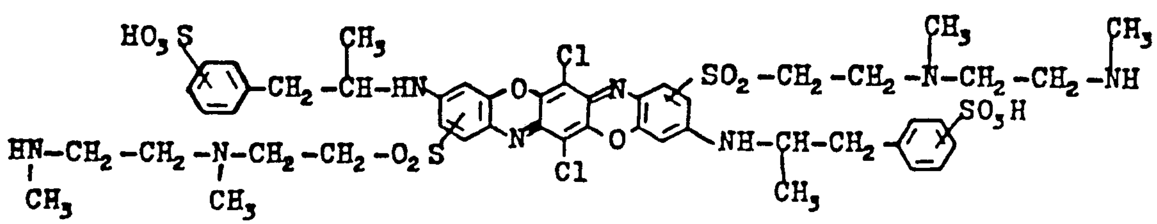 | 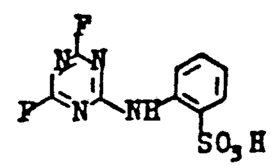 |

Tabelle (6. Fortsetzung)

| Beispiel | Triphendioxazin-sulfon-komponente | Reaktivkomponente |
| --- | --- | --- |
| 35 | 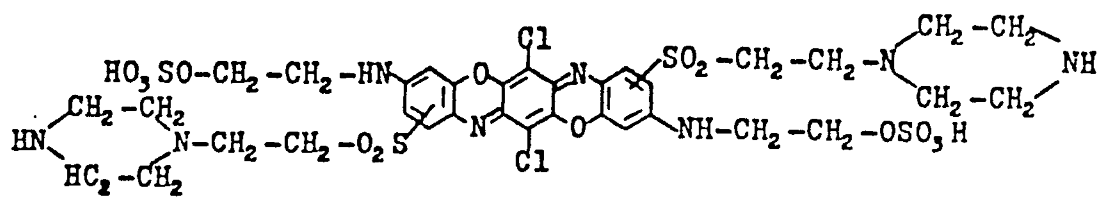 | 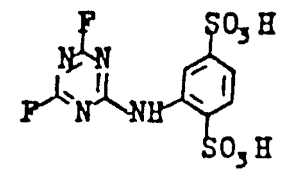 |
| 36 | 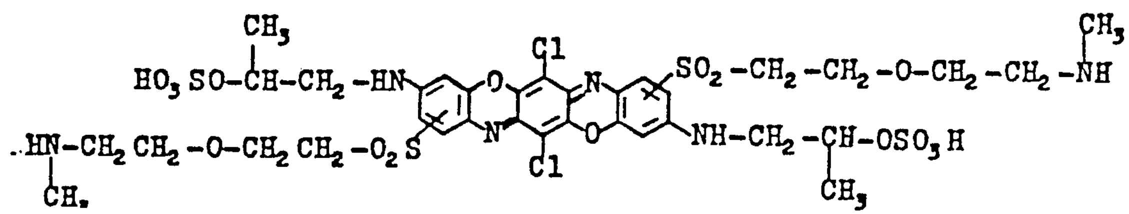 | 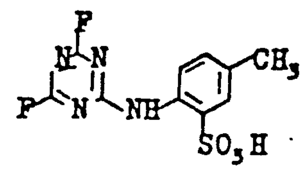 |
| 37 | 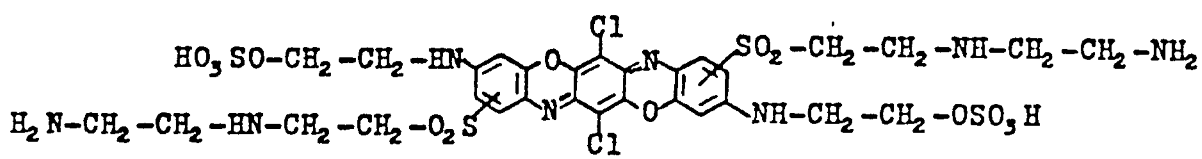 | 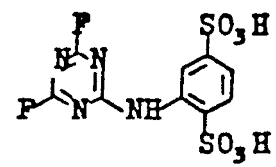 |
| 38 | 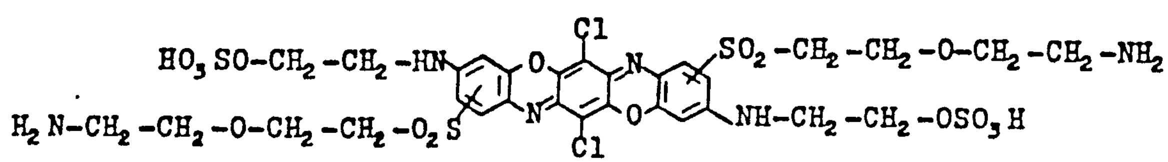 | 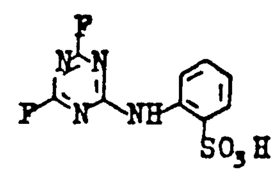 |

Tabelle (7. Fortsetzung)

| Beispiel | Triphendioxazin-sulfon-Komponente | Reaktivkomponente |
| --- | --- | --- |
| 39 | 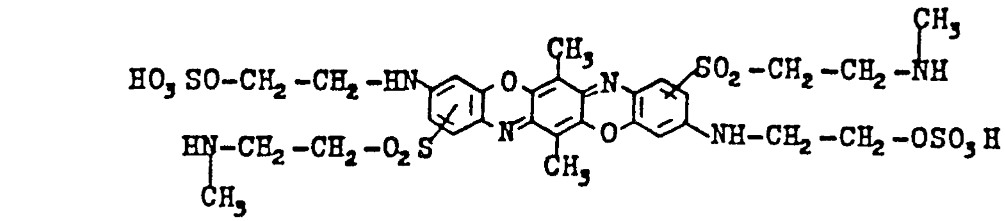 | 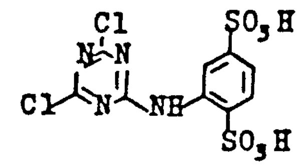 |
| 40 | 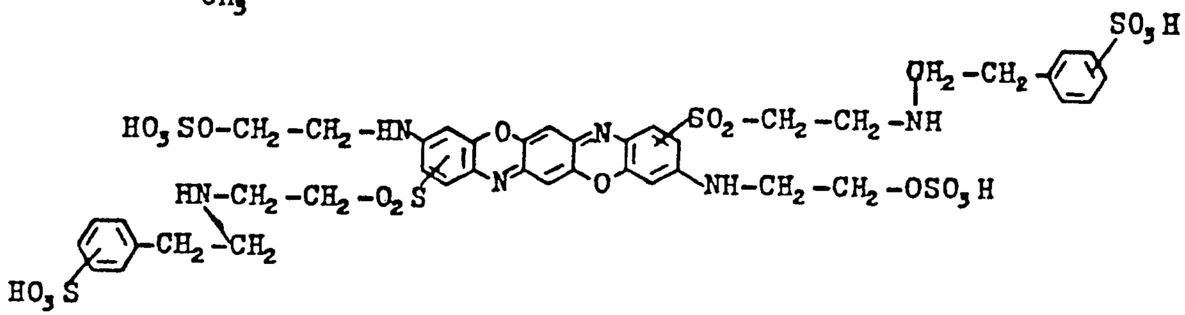 | 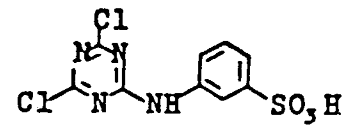 |
| 41 | 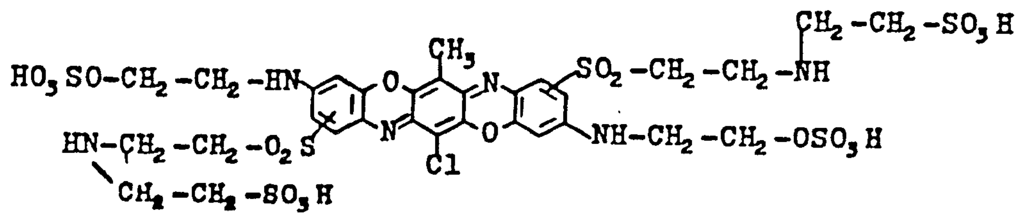 | 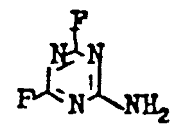 |
| 42 | 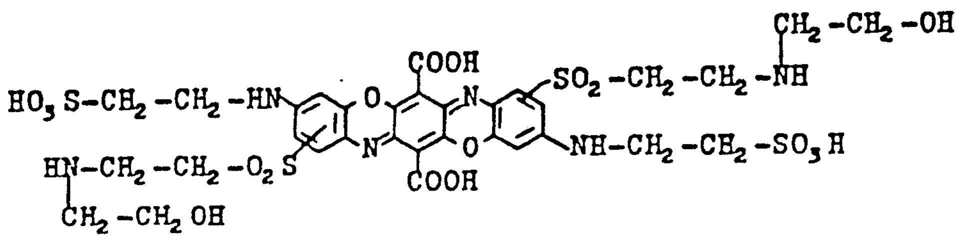 | 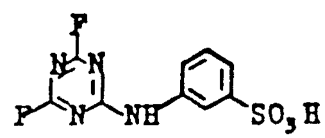 |

Tabelle (8. Fortsetzung)

| Beispiel | Triphendioxazin-sulfon-Komponente | Reaktivkomponente |
| --- | --- | --- |
| 43 | 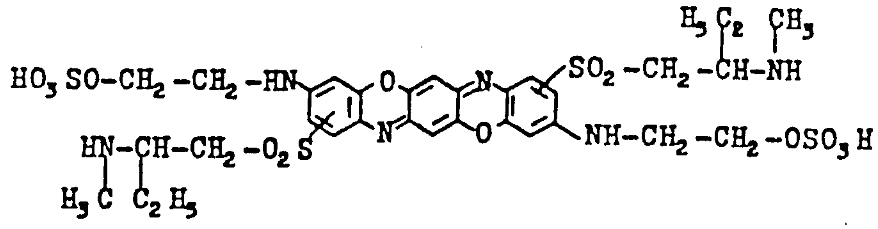 | 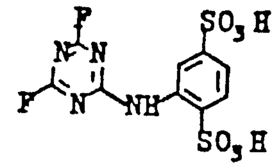 |
| 44 | 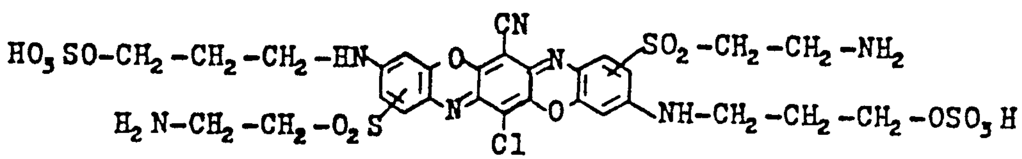 | 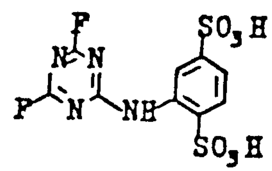 |
| 45 | 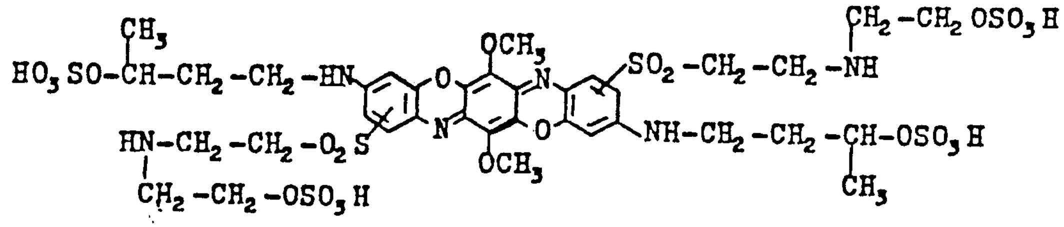 | 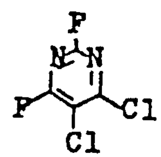 |
| 46 | 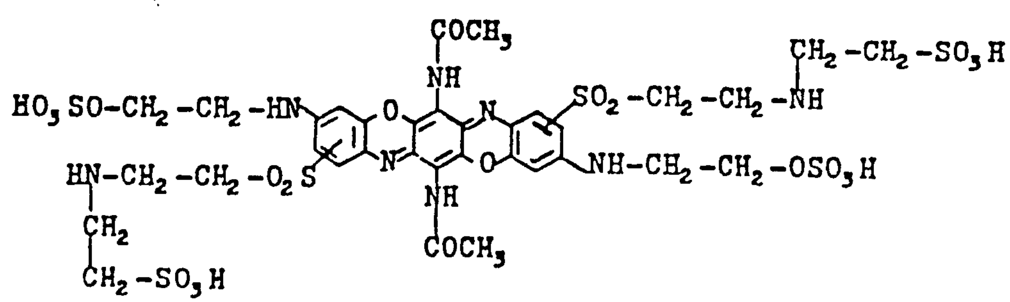 | 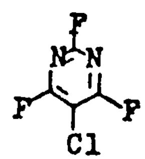 |

Tabelle (9. Fortsetzung)

| Beispiel | Triphendioxazin-sulfon-Komponente | Reaktivkomponente |
|---|---|---|
| 47 | 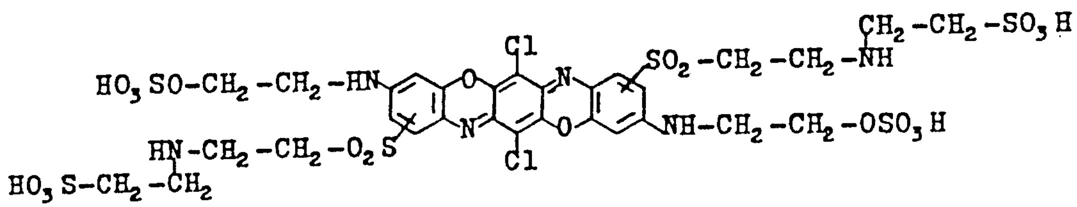 | 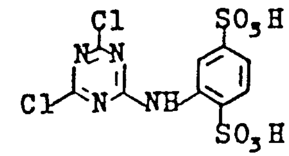 |
| 48 | 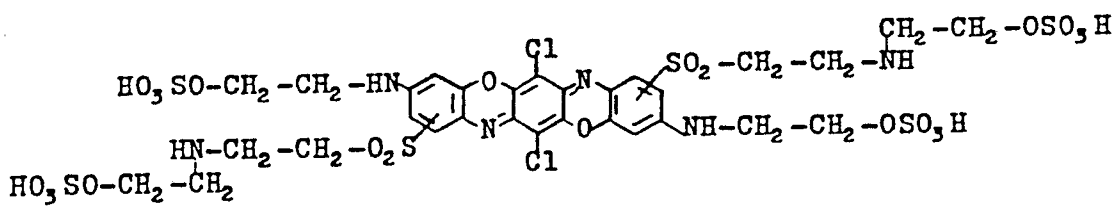 | " |
| 49 | 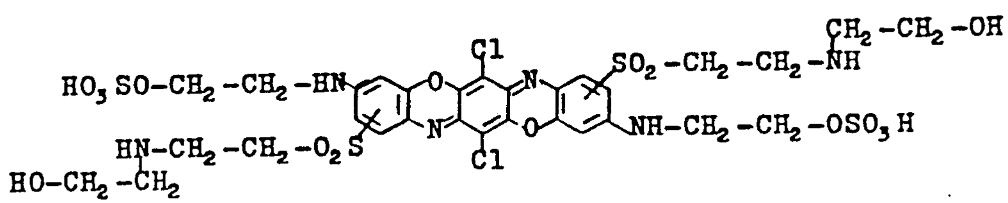 | " |
| 50 | " | 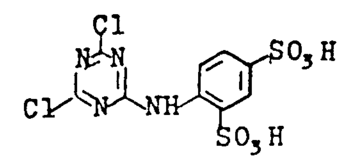 |

Tabelle (10. Fortsetzung)

| Beispiel | Triphendioxazin-sulfon-Komponente | Reaktivkomponente |
| --- | --- | --- |
| 51 | 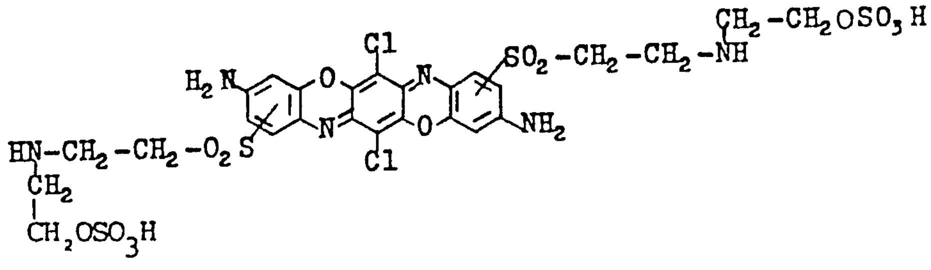 | 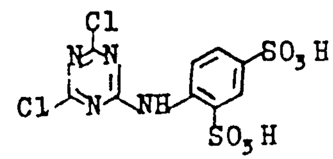 |
| 52 | " | 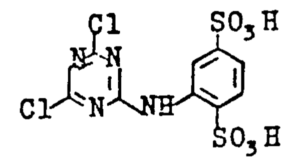 |
| 53 | 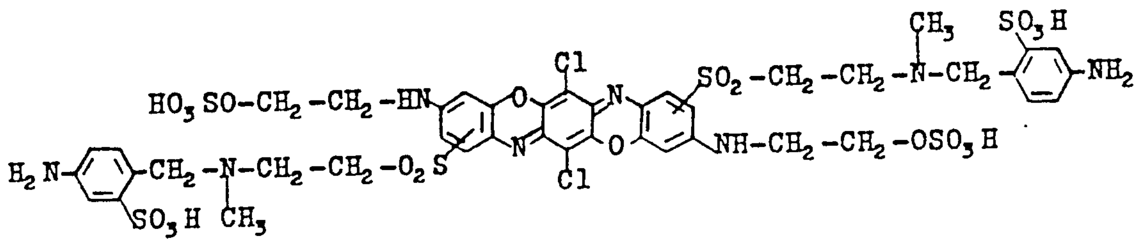 | 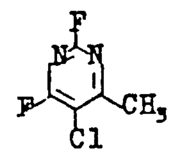 |
| 54 | " | 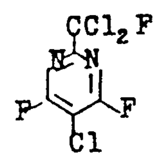 |

**Patentansprüche**

1. Farbstoffe der Formel

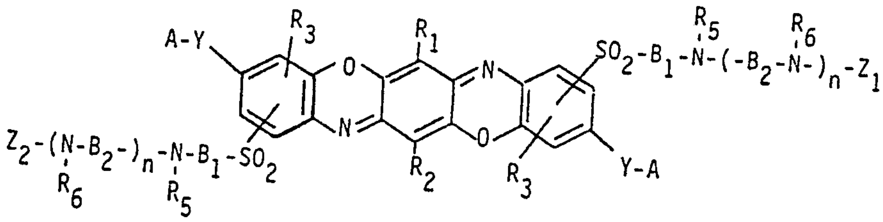

(1)

worin

$R_1$, $R_2$ = H, Cl, Br, $C_1$–$C_4$-Alkyl, $C_1$–$C_4$-Alkoxy, gegebenenfalls substituiertes Phenoxy, Acylamino, Carboxy, gegebenenfalls substituiertes Carbonamid,

$R_3$ = H, $C_1$–$C_4$-Alkyl, Cl, Br, $C_1$–$C_4$-Alkoxy, Sulfo, Carboxy,

A = H, gegebenenfalls durch Sulfo, Sulfato, Carboxy, Hydroxy oder Alkoxy substituiertes $C_1$–$C_6$-Alkyl, Cycloalkyl, Aralkyl, Aryl,

$B_1$ = gegebenenfalls substituiertes, gegebenenfalls durch O, S oder N unterbrochenes $C_2$–$C_6$-Alkylen,

$B_2$ = $B_1$ oder Aralkylen oder Arylen.

Y = O, $NR_4$,

$R_4$ = H, gegebenenfalls substituiertes $C_1$–$C_6$-Alkyl,

$R_5$, $R_6$ = H, gegebenenfalls substituiertes $C_1$–$C_6$-Alkyl, $C_5$–$C_6$-Cycloalkyl, Aryl oder zusammen $C_2$–$C_6$-Alkylen sowie $C_1$–$C_4$-Aralkyl,

n = 0 oder 1,

$Z_1$, $Z_2$ = H oder faserreaktiver Rest.

2. Farbstoffe des Anspruches 1 der Formel

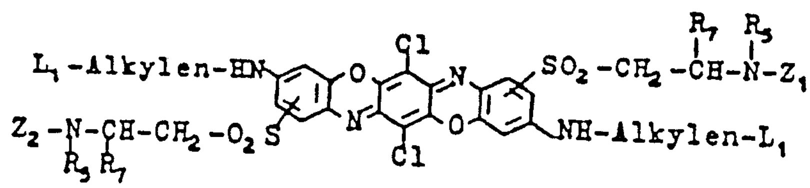

bzw.

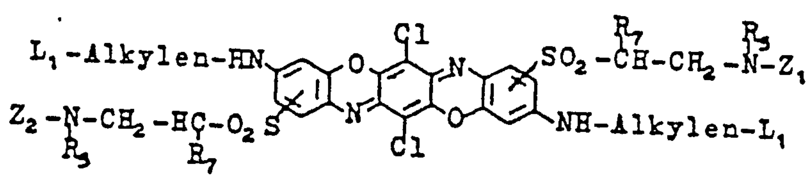

worin $R_5$, $Z_1$, $Z_2$ die in Anspruch 1 angegebene Bedeutung haben,

Alkylen = $C_1$–$C_6$-Alkylen

$L_1$ = H, $SO_3H$, $OSO_3H$, COOH,

$R_7$ = H, $CH_3$

der Formeln

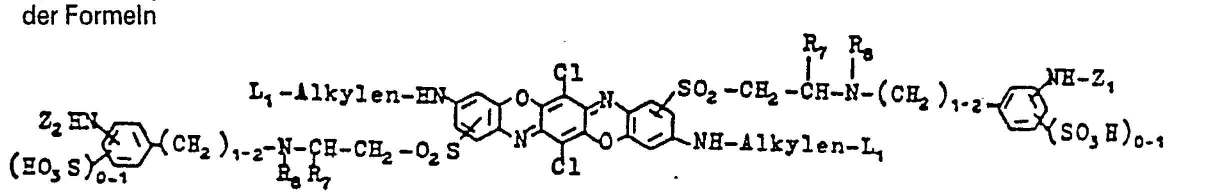

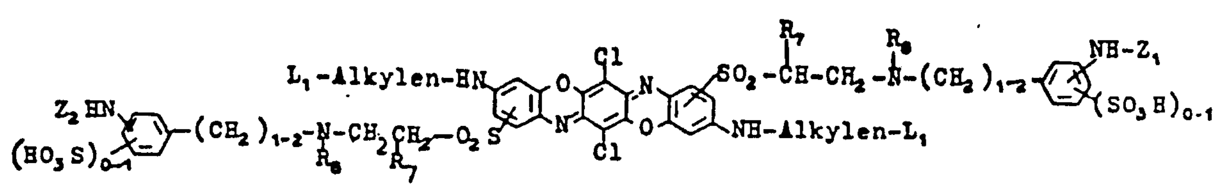

worin

Alkylen, $L_1$, $R_7$, $Z_1$ und $Z_2$ die oben angegebene Bedeutung haben und

$R_8$ = H, $C_1$–$C_2$-Alkyl der Formel

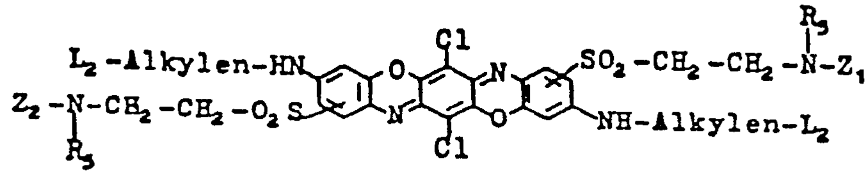

worin Alkylen, $R_5$, $Z_1$, $Z_2$ die oben angegebene Bedeutung haben und
$L_2 = SO_3H, OSO_3H$,
und der Formel

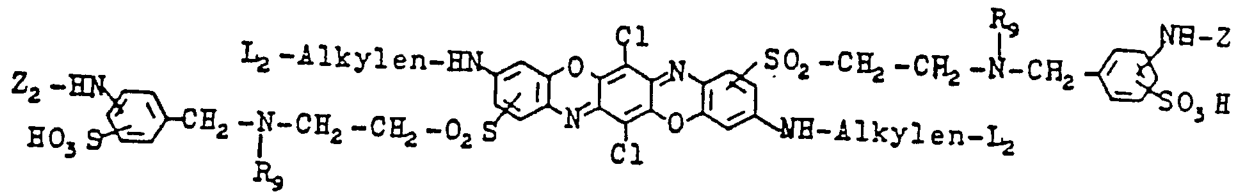

worin Alkylen, $L_2$, $Z_1$, $Z_2$ die oben angegebene Bedeutung haben und
$R_9 = H, CH_3$.

3. Farbstoffe der Ansprüche 1 und 2 mit
$R_5 = C_1–C_3$-Alkyl, gegebenenfalls substituiert durch OH, $OSO_3H$, $SO_3H$, COOH.

4. Farbstoffe der Ansprüche 1–3 mit $Z_1$ und $Z_2$ = Monochlortriazinyl-, Monofluortriazinyl- oder Fluorpyrimidinyl-Rest.

5. Verwendung der Farbstoffe der Ansprüche 1–4 zum Färben und Bedrucken von Hydroxylgruppen- oder Amidgruppen-haltige Materialien.

6. Mit den Farbstoffen der Ansprüche 1–4 gefärbte oder bedruckte Hydroxylgruppen- oder Amidgruppen-haltige Materialien.

**Revendications**

1. Colorants de formule

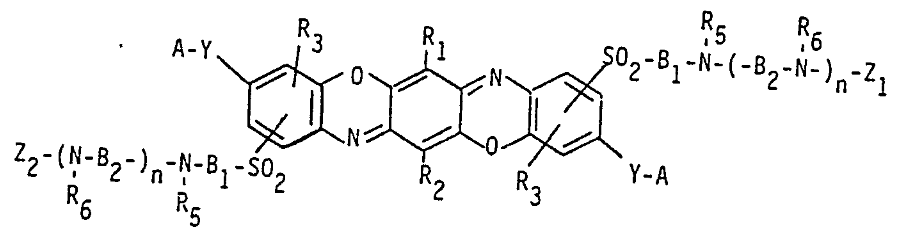

(1)

dans laquelle
$R_1$, $R_2$ = H, Cl, Br, alkyle en $C_1$ à $C_4$, alkoxy en $C_1$ à $C_4$, phénoxy éventuellement substitué, acylamino, carboxy, carboxamido éventuellement substitué,
$R_3$ = H, alkyle en $C_1$ à $C_4$, Cl, Br, alkoxy en $C_1$ à $C_4$, sulfo, carboxy,
A = H, un groupe alkyle en $C_1$ à $C_6$, cycloalkyle, aralkyle, aryle portant éventuellement un substituant sulfo, sulfato, carboxy, hydroxy ou alkoxy,
$B_1$ = groupe alkylène en $C_2$ à $C_6$ éventuellement interrompu par O, S ou N, substitué le cas échéant
$B_2$ = $B_1$ ou groupe aralkylène ou arylène.
Y = O, $NR_4$,
$R_4$ = H, groupe alkyle en $C_1$ à $C_6$ éventuellement substitué,
$R_5$, $R_6$ = H, groupe alkyle en $C_1$ à $C_6$, cycloalkyle en $C_5$ ou $C_6$, aryle éventuellement substitués, ou conjointement groupe alkylène en $C_2$ à $C_6$, ainsi qu'aralkyle en $C_1$ à $C_4$,
n = 0 ou 1,
$Z_1$, $Z_2$ = H ou un reste réactif envers la fibre.

2. Colorants suivant la revendication 1, de formule

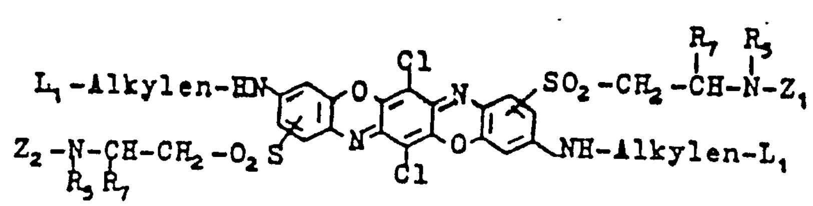

ou

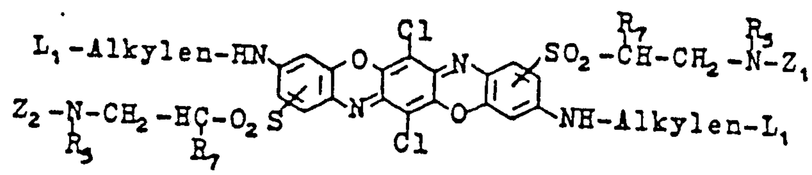

dans laquelle $R_5$, $Z_1$, $Z_2$ ont la définition indiquée dans la revendication 1, alkylène = alkylène en $C_1$ à $C_6$

$L_1$ = H, $SO_3H$, $OSO_3H$, COOH,

$R_7$ = H, $CH_3$

de formules

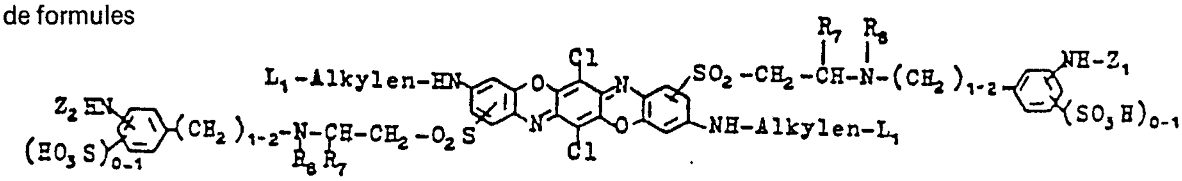

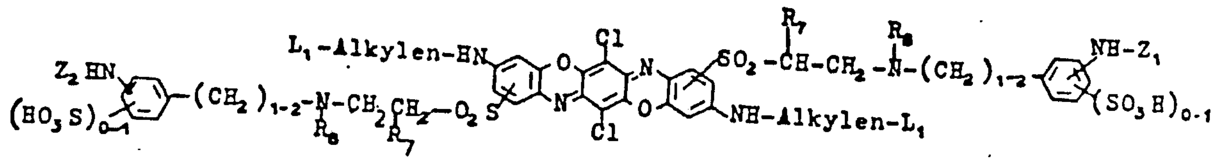

dans lesquelles

alkylène, $L_1$, $R_7$, $Z_1$ et $Z_2$ ont la définition indiquée ci-dessus et

$R_8$ = H, alkyle en $C_1$ ou $C_2$;

de formule

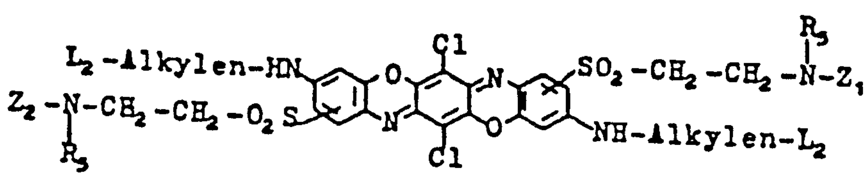

dans laquelle alkylène, $R_5$, $Z_1$, $Z_2$ ont la définition indiquée ci-dessus et

$L_2$ = $SO_3H$, $OSO_3H$,

et de formule

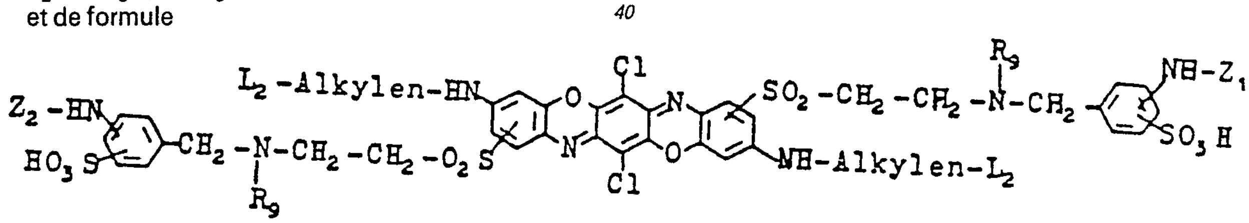

dans laquelle alkylène, $L_2$, $Z_1$, $Z_2$ ont la définition indiquée ci-dessus et

$R_9$ = H, $CH_3$.

3. Colorants suivant les revendications 1 et 2, dans lesquels

$R_5$ = alkyle en $C_1$ à $C_3$, éventuellement substitué par OH, $OSO_3H$, $SO_3H$, COOH.

4. Colorants suivant les revendications 1 à 3, dans lesquels $Z_1$ et $Z_2$ = un reste monochlorotriazinyle, monofluorotriazinyle ou fluoropyrimidinyle.

5. Utilisation des colorants suivant les revendications 1 à 4 pour la teinture et l'impression de matières contenant des groupes hydroxyle ou des groupes amido.

6. Matières contenant des groupes hydroxyle ou des groupes amido, teintes ou imprimées avec les colorants suivant les revendications 1 à 4.

## Claims

1. Dyestuffs of the formula

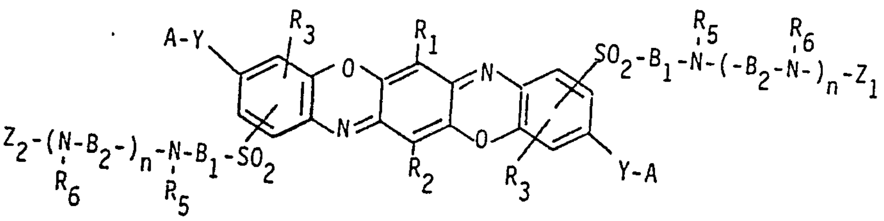

(1)

wherein

$R_1$, $R_2$ = H, Cl, Br, $C_1$–$C_4$-alkyl, $C_1$–$C_4$-alkoxy, optionally substituted phenoxy, acylamino, carboxyl, optionally substituted carboxamide,
$R_3$ = H, $C_1$–$C_4$-alkyl, Cl, Br, $C_1$–$C_4$-alkoxy, sulpho, carboxyl,
A = H, optionally sulpho-, sulphato-, carboxyl-, hydroxyl- or alkoxy-substituted $C_1$–$C_6$-alkyl, cycloalkyl, aralkyl, aryl,
$B_1$ = optionally substituted, optionally O-, S- or N-interrupted $C_2$–$C_6$-alkylene,
$B_2$ = $B_1$ or aralkylene or arylene,
Y = O, $NR_4$,
$R_4$ = H, optionally substituted $C_1$–$C_6$-alkyl,
$R_5$, $R_6$ = H, optionally substituted $C_1$–$C_6$-alkyl, $C_5$–$C_6$-cycloalkyl, aryl or together $C_2$–$C_6$-alkylene, and also $C_1$–$C_4$-aralkyl,
n = 0 or 1,
$Z_1$, $Z_2$ = H or fibre-reactive radical.

2. Dyestuffs of Claim 1 of the formula

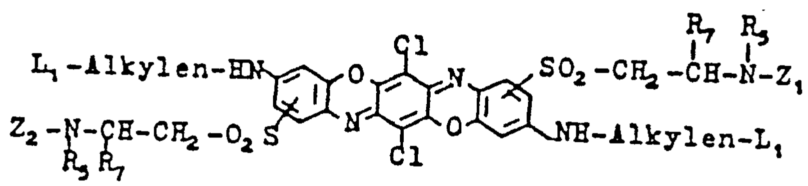

or

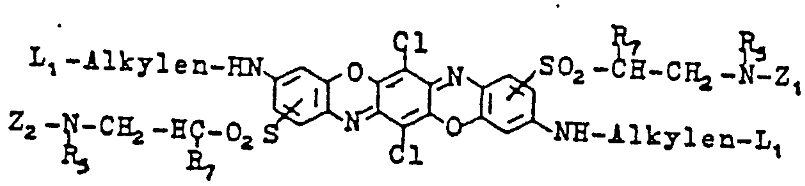

wherein
$R_5$, $Z_1$, $Z_2$ have the denotation indicated in Claim 1,
Alkylene = $C_1$–$C_6$-alkylene
$L_1$ = H, $SO_3H$, $OSO_3H$, COOH,
$R_7$ = H, $CH_3$
of the formula

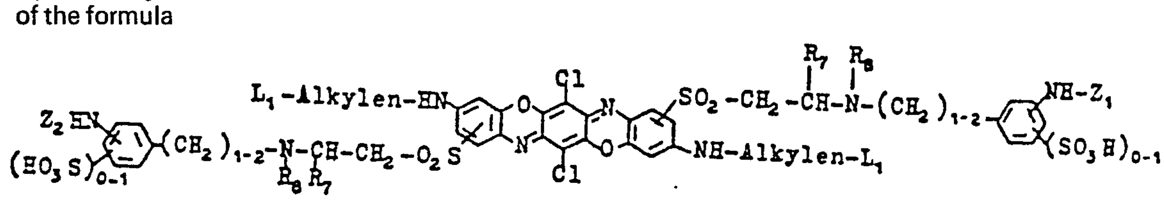

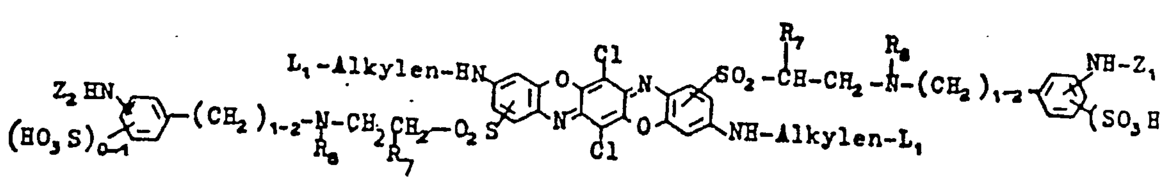

wherein

Alkylene, $L_1$, $R_7$, $Z_1$ and $Z_2$ have the abovementioned denotation and

$R_8$ = H, $C_1$–$C_2$-alkyl of the formula

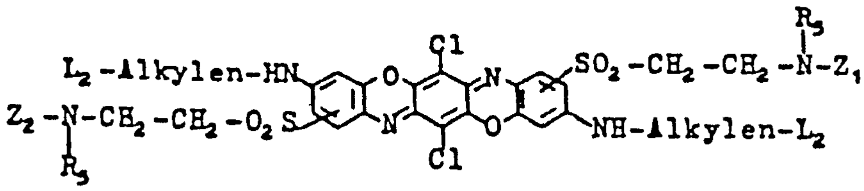

wherein

Alkylene, $R_5$, $Z_1$, $Z_2$ have the abovementioned denotation and

$L_2$ = $SO_3H$, $OSO_3H$,

and of the formula

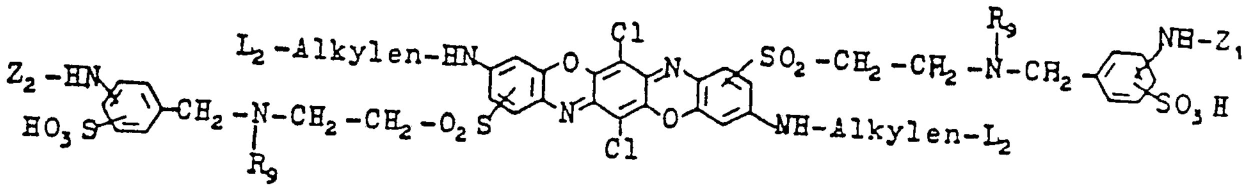

wherein

Alkylene, $L_2$, $Z_1$, $Z_2$ have the abovementioned denotation and

$R_9$ = H, $CH_3$.

3. Dyestuffs of Claims 1 and 2 where

$R_5$ = $C_1$–$C_3$-alkyl, optionally substituted by OH, $OSO_3H$, $SO_3H$, COOH.

4. Dyestuffs of Claims 1–3 where

$Z_1$ and $Z_2$ = monochlorotriazinyl, monofluorotriazinyl or fluoropyrimidinyl radical.

5. Use of the dyestuffs of Claims 1–4 for dyeing and printing hydroxyl- or amido-containing materials.

6. Hydroxyl- or amido-containing materials dyed or printed with the dyestuffs of Claims 1–4.